(19) Europäisches Patentamt
European Patent Office
Office européen des brevets

(11) EP 3 044 264 B1

(12) **EUROPEAN PATENT SPECIFICATION**

(45) Date of publication and mention of the grant of the patent:
**01.11.2017 Bulletin 2017/44**

(21) Application number: **14789618.7**

(22) Date of filing: **10.09.2014**

(51) Int Cl.:
***C08L 69/00*** *(2006.01)*

(86) International application number:
**PCT/IB2014/064401**

(87) International publication number:
**WO 2015/036941 (19.03.2015 Gazette 2015/11)**

(54) **POLYCARBONATE BASED DUCTILE THERMALLY CONDUCTIVE POLYMER COMPOSITIONS AND USES**

DUKTILE UND WÄRMELEITFÄHIGE POLYMERZUSAMMENSETZUNGEN AUF POLYCARBONATBASIS UND VERWENDUNGEN DAVON

COMPOSITIONS POLYMÈRES CONDUCTRICES DE CHALEUR, DUCTILES ET À BASE DE POLYCARBONATE, ET UTILISATION DE CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2013 US 201314023320**

(43) Date of publication of application:
**20.07.2016 Bulletin 2016/29**

(73) Proprietor: **SABIC Global Technologies B.V.**
**4612 PX Bergen op Zoom (NL)**

(72) Inventors:
- **GUO, Mingcheng**
  **Shanghai 201319 (CN)**
- **ZHANG, Yaqin**
  **Shanghai 201319 (CN)**
- **ZHENG, Yun**
  **Shanghai 201319 (CN)**

(74) Representative: **Agasse, Stéphane et al**
**Cabinet GERMAIN & MAUREAU**
**B.P. 6153**
**69466 Lyon Cedex 06 (FR)**

(56) References cited:
**WO-A1-2012/056971**
**US-A1- 2007 135 569**
**US-A1- 2012 319 031**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 044 264 B1

Printed by Jouve, 75001 PARIS (FR)

## Description

### FIELD OF INVENTION

The present invention relates to blended thermoplastic polymer compositions comprising one or more polycarbonate polymers and one or more thermally conductive fillers, wherein the blended polymer composition have both excellent thermal conductivity and mechanical performance properties.

### BACKGROUND OF THE INVENTION

Decreasing the dimensions and weight of components as well as increasing performance in portable electronics is a key market demand. However, the reduction in size of electronic devices results in greater heat retention which can degrade product performance. Thermally conductive materials are typically used to dissipate heat in many devices such as, for example, light-emitting diode ("LED") lamps, e-motors, circuits, processors and coil bobbins. More recently, new market applications involve thermal management, including thermal dissipation in mobile phone devices and mobile Wi-Fi. These electronic devices require materials with different properties than those mandated by earlier devices. This new market has generated a need for suitable polymer compositions that have improved mechanical performance properties, such as high impact strength and ductility, while retaining required properties of thermal conductivity, robust flame retardance, and superior heat dissipation. Polycarbonate compositions having a high thermal conductivity comprising a blend of polycarbonate, polycarbonate-polysiloxane and thermally conductive filler are known from WO 2012/056971 A1.

Accordingly, there is a growing need for thermally conductive polymer compositions formed from amorphous polymer resins which provide improved impact performance, increased ductility, robust flame retardance, and superior heat dissipation

### SUMMARY OF THE INVENTION

The present invention relates to blended thermoplastic polymer compositions comprising one or more polycarbonate polymers and one or more thermally conductive fillers, wherein the blended polymer composition have both excellent thermal conductivity and mechanical performance properties.

In one embodiment, the invention relates to blended thermoplastic compositions comprising: (a) from 20 weight percent (wt%) to 80 wt% of a first polycarbonate polymer component; (b) from 1 wt% to 30 wt.%, preferyble 5 wt.% to 25 wt.%, or preferably 10 to 20 wt.%, of a second polycarbonate polymer component, wherein the second polycarbonate polymer component is a branched chain polycarbonate polymer; (c) from 1 wt% to 30 wt% of at least one polycarbonate-polysiloxane copolymer component; and (d) from greater than 0 wt% to 50 wt% of a thermally conductive filler component; wherein the combined weight percent value of all components does not exceed 100 wt%; wherein all weight percent values are based on the total weight of the composition; wherein a molded sample of the blended thermoplastic composition has a through-plane thermal conductivity when determined in accordance with ASTM E1461 of greater than or equal to 0.4 watts per meter kelvin (W/mK); and wherein a molded sample of the blended thermoplastic composition has an in-plane thermal conductivity when determined in accordance with ASTM E1461 of greater than or equal to 1.0 W/mK.

In various further embodiments, the invention relates to methods of preparing a blended thermoplastic composition, comprising mixing: (a) from 20 wt% to 80 wt% of a first polycarbonate polymer component; (b) from 1 wt% to 30 wt%, preferably 5 wt% to 25 wt%, or preferably 10 wt% to 20 wt%, of a second polycarbonate polymer component, wherein the second polycarbonate polymer component is a branched chain polycarbonate polymer; (c) from 1 wt% to 30 wt% of at least one polycarbonate-polysiloxane copolymer component; and (d) from greater than 0 wt% to 50 wt% of a thermally conductive filler component; wherein the combined weight percent value of all components does not exceed 100 wt%; wherein all weight percent values are based on the total weight of the composition; wherein a molded sample of the blended thermoplastic composition has a through-plane thermal conductivity when determined in accordance with ASTM E1461 of greater than or equal to 0.4 W/mK; and wherein a molded sample of the blended thermoplastic composition has an in-plane thermal conductivity when determined in accordance with ASTM E1461 of greater than or equal to 1.0 W/mK.

In various further embodiments, the invention relates to articles comprising the disclosed compositions.

While embodiments of the present invention can be described and claimed in a particular statutory class, such as the system statutory class, this is for convenience only and one of skill in the art will understand that each embodiment of the present invention can be described and claimed in any statutory class. Unless otherwise expressly stated, it is in no way intended that any method or embodiment set forth herein be construed as requiring that its steps be performed in a specific order. Accordingly, where a method claim does not specifically state in the claims or descriptions that the

steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of embodiments described in the specification.

Additional embodiments of the invention will be set forth in part in the description which follows, and in part will be obvious from the description, or can be learned by practice of the invention. The advantages of the invention will be realized and attained by means of the elements and combinations particularly pointed out in the appended claims. It is to be understood that both the foregoing general description and the following detailed description are exemplary and explanatory only and are not restrictive of the invention, as claimed.

DETAILED DESCRIPTION

The present invention can be understood more readily by reference to the following detailed description of the invention and the Examples included therein.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular embodiments only and is not intended to be limiting. Although any methods and materials similar or equivalent to those described herein can be used in the practice or testing of the present invention, example methods and materials are now described.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

It is also to be understood that the terminology used herein is for the purpose of describing particular embodiments only and is not intended to be limiting. As used in the specification and in the claims, the term "comprising" can include the embodiments "consisting of" and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate poly" includes mixtures of two or more polycarbonate polymers.

As used herein, the term "combination" is inclusive of blends, mixtures, alloys, reaction products, and the like.

Ranges can be expressed herein as from one particular value, and/or to another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the value designated some other value approximately or about the same. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optionally substituted alkyl" means that the alkyl group can or cannot be substituted and that the description includes both substituted and unsubstituted alkyl groups.

As used herein, the term "effective amount" refers to an amount that is sufficient to achieve the desired modification of a physical property of the composition or material. For example, an "effective amount" of a thermally conductive filler refers to an amount that is sufficient to achieve the desired improvement in the property modulated by the formulation component, e.g. achieving the desired level of thermal conductivity. The specific level in terms of wt% in a composition required as an effective amount will depend upon a variety of factors including the amount and type of polycarbonate, amount and type of polycarbonate, amount and type of thermally conductive filler, and end use of the article made using the composition.

Disclosed are the components to be used to prepare the compositions of the invention as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all embodiments of this application including, but not limited to, steps in methods of making and using the compositions of the invention. Thus, if there are a variety of additional steps that can be performed it is understood that each of these additional steps can be performed with any specific embodiment or combination of embodiments of the methods of the invention.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Compounds are described using standard nomenclature. For example, any position not substituted by any indicated group is understood to have its valence filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this invention belongs.

The term "alkyl group" as used herein is a branched or unbranched saturated hydrocarbon group of 1 to 24 carbon atoms, such as methyl, ethyl, n-propyl, isopropyl, n-butyl, isobutyl, t-butyl, pentyl, hexyl, heptyl, octyl, decyl, tetradecyl, hexadecyl, eicosyl, tetracosyl and the like. A "lower alkyl" group is an alkyl group containing from one to six carbon atoms.

The term "aryl group" as used herein is any carbon-based aromatic group including, but not limited to, benzene, naphthalene, etc. The term "aromatic" also includes "heteroaryl group," which is defined as an aromatic group that has at least one heteroatom incorporated within the ring of the aromatic group. Examples of heteroatoms include, but are not limited to, nitrogen, oxygen, sulfur, and phosphorus. The aryl group can be substituted or unsubstituted. The aryl group can be substituted with one or more groups including, but not limited to, alkyl, alkynyl, alkenyl, aryl, halide, nitro, amino, ester, ketone, aldehyde, hydroxy, carboxylic acid, or alkoxy.

The term "aralkyl" as used herein is an aryl group having an alkyl, alkynyl, or alkenyl group as defined above attached to the aromatic group. An example of an aralkyl group is a benzyl group.

The term "carbonate group" as used herein is represented by the formula OC(O)OR, where R can be hydrogen, an alkyl, alkenyl, alkynyl, aryl, aralkyl, cycloalkyl, halogenated alkyl, or heterocycloalkyl group described above.

The term "organic residue" defines a carbon containing residue, i.e., a residue comprising at least one carbon atom, and includes but is not limited to the carbon-containing groups, residues, or radicals defined hereinabove. Organic residues can contain various heteroatoms, or be bonded to another molecule through a heteroatom, including oxygen, nitrogen, sulfur, phosphorus, or the like. Examples of organic residues include but are not limited alkyl or substituted alkyls, alkoxy or substituted alkoxy, mono or di-substituted amino, amide groups, etc. Organic residues can preferably comprise 1 to 18 carbon atoms, 1 to 15, carbon atoms, 1 to 12 carbon atoms, 1 to 8 carbon atoms, 1 to 6 carbon atoms, or 1 to 4 carbon atoms. In a further embodiment, an organic residue can comprise 2 to 18 carbon atoms, 2 to 15, carbon

atoms, 2 to 12 carbon atoms, 2 to 8 carbon atoms, 2 to 4 carbon atoms, or 2 to 4 carbon atoms.

A very close synonym of the term "residue" is the term "radical," which as used in the specification and concluding claims, refers to a fragment, group, or substructure of a molecule described herein, regardless of how the molecule is prepared. For example, a 2,4-dihydroxyphenyl radical in a particular compound has the structure:

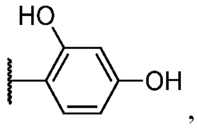

regardless of whether 2,4-dihydroxyphenyl is used to prepare the compound. In some embodiments the radical (for example an alkyl) can be further modified (i.e., substituted alkyl) by having bonded thereto one or more "substituent radicals." The number of atoms in a given radical is not critical to the present invention unless it is indicated to the contrary elsewhere herein.

"Organic radicals," as the term is defined and used herein, contain one or more carbon atoms. An organic radical can have, for example, 1 to 26 carbon atoms, 1 to 18 carbon atoms, 1 to 12 carbon atoms, 1 to 8 carbon atoms, 1 to 6 carbon atoms, or 1 to 4 carbon atoms. In a further embodiment, an organic radical can have 2 to 26 carbon atoms, 2 to 18 carbon atoms, 2 to 12 carbon atoms, 2 to 8 carbon atoms, 2 to 6 carbon atoms, or 2 to 4 carbon atoms. Organic radicals often have hydrogen bound to at least some of the carbon atoms of the organic radical. One example, of an organic radical that comprises no inorganic atoms is a 5, 6, 7, 8-tetrahydro-2-naphthyl radical. In some embodiments, an organic radical can contain 1-10 inorganic heteroatoms bound thereto or therein, including halogens, oxygen, sulfur, nitrogen, phosphorus, and the like. Examples of organic radicals include but are not limited to an alkyl, substituted alkyl, cycloalkyl, substituted cycloalkyl, mono-substituted amino, di-substituted amino, acyloxy, cyano, carboxy, carboalkoxy, alkylcarboxamide, substituted alkylcarboxamide, dialkylcarboxamide, substituted dialkylcarboxamide, alkylsulfonyl, alkylsulfinyl, thioalkyl, thiohaloalkyl, alkoxy, substituted alkoxy, haloalkyl, haloalkoxy, aryl, substituted aryl, heteroaryl, heterocyclic, or substituted heterocyclic radicals, wherein the terms are defined elsewhere herein. A few non-limiting examples of organic radicals that include heteroatoms include alkoxy radicals, trifluoromethoxy radicals, acetoxy radicals, dimethylamino radicals and the like.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g. polycarbonate polymers, by methods well known to a person having ordinary skill in the art using molecular weight standards, e.g. polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

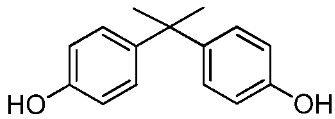,

BisA can also be referred to by the name 4,4'-(propane-2,2-diyl)diphenol; *p,p'*-isopropylidenebisphenol; or 2,2-bis(4-hydroxyphenyl)propane. BisA has the CAS # 80-05-7.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

As briefly described above, the present invention relates to blended thermoplastic polymer compositions comprising one or more polycarbonate polymers, and one or more thermally conductive fillers, wherein the blended polymer composition have both excellent thermal conductivity and mechanical performance properties.

In one embodiment, the invention relates to blended thermoplastic compositions comprising: (a) from 20 wt% to 80 wt% of a first polycarbonate polymer component; (b) from 1 wt% to 30 wt% of a second polycarbonate polymer component, wherein the second polycarbonate polymer component is a branched chain polycarbonate polymer; (c) from 1 wt% to 30 wt%, preferably 5 wt% to 25 wt%, or preferably 10 wt% to 20 wt%, of at least one polycarbonate-polysiloxane copolymer component; and (d) from greater than 0 wt% to 50 wt% of a thermally conductive filler component; wherein the combined weight percent value of all components does not exceed 100 wt%; wherein all weight percent values are based on the total weight of the composition; wherein a molded sample of the blended thermoplastic composition has a through-plane thermal conductivity when determined in accordance with ASTM E1461 of greater than or equal to 0.4 W/mK; and wherein a molded sample of the blended thermoplastic composition has an in-plane thermal conductivity when determined in accordance with ASTM E1461 of greater than or equal to 1.0 W/mK.

In a further embodiment, the molded sample of the blended thermoplastic compositions has a notched impact strength of from about 50 joules per meter (J/m) to about 1000 J/m. In a still further embodiment, the molded sample of the blended thermoplastic compositions has a notched impact strength of from about 50 J/m to about 800 J/m. In yet a further embodiment, the molded sample of the blended thermoplastic compositions has a notched impact strength of from about 50 J/m to about 500 J/m.

In a further embodiment, the molded sample of the blended thermoplastic compositions has an unnotched impact strength of from about 200 J/m to about 3000 J/m. In a still further embodiment, the molded sample of the blended thermoplastic compositions has an unnotched impact strength of from about 200 J/m to about 2500 J/m. In yet a further embodiment, the molded sample of the blended thermoplastic compositions has an unnotched impact strength of from about 200 J/m to about 1500 J/m.

In a further embodiment, the molded sample of the blended thermoplastic compositions has a through-plane thermal conductivity of from about 0.4 W/mK to about 1.0 W/mK. In a still further embodiment, the molded sample of the blended thermoplastic compositions has a through-plane thermal conductivity of from about 0.4 W/mK to about 0.8 W/mK. In yet a further embodiment, the molded sample of the blended thermoplastic compositions has a through-plane thermal conductivity of from about 0.4 W/mK to about 0.6 W/mK.

In a further embodiment, the molded sample of the blended thermoplastic compositions has an in-plane thermal conductivity of from about 1.0 W/mK to about 4.0 W/mK. In a still further embodiment, the molded sample of the blended

thermoplastic compositions has an in-plane thermal conductivity of from about 1.0 W/mK to about 3.0 W/mK. In yet a further embodiment, the molded sample of the blended thermoplastic compositions has an in-plane thermal conductivity of from about 1.0 W/mK to about 2.5 W/mK.

In various embodiments, the compositions of the present invention further comprise an additive selected from coupling agents, antioxidants, mold release agents, UV absorbers, light stabilizers, heat stabilizers, lubricants, plasticizers, pigments, dyes, colorants, anti-static agents, nucleating agents, anti-drip agents, acid scavengers, and combinations of two or more of the foregoing. In a further embodiment, compositions of the present invention further comprise at least one additive selected from a flame retardant, a colorant, a primary anti-oxidant, and a secondary anti-oxidant.

In one embodiment, the disclosed polymer compositions comprise a first polycarbonate polymer composition wherein the first polycarbonate polymer comprises bisphenol A, a polycarbonate copolymer, or polyester carbonate polymer, or combinations thereof.

In one embodiment, a polycarbonate can comprise any polycarbonate material or mixture of materials, for example, as recited in U.S. Patent No. 7,786,246. The term polycarbonate can be further defined as compositions have repeating structural units of the formula (1):

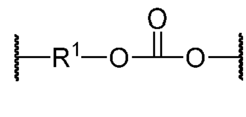 (1),

in which at least 60 percent of the total number of $R^1$ groups are aromatic organic radicals and the balance thereof are aliphatic, alicyclic, or aromatic radicals. In a further embodiment, each $R^1$ is an aromatic organic radical and, more preferably, a radical of the formula (2):

$$-A^1-Y^1-A^2- \qquad (2),$$

wherein each of $A^1$ and $A^2$ is a monocyclic divalent aryl radical and $Y^1$ is a bridging radical having one or two atoms that separate $A^1$ from $A^2$. In various embodiments, one atom separates $A^1$ from $A^2$. For example, radicals of this type include, but are not limited to, radicals such as -O-, -S-, -S(O)-, -S($O_2$)-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene.

In a further embodiment, polycarbonates can be produced by the interfacial reaction of dihydroxy compounds having the formula HO-$R^1$-OH, which includes dihydroxy compounds of formula (3):

$$HO-A^1-Y^1-A^2-OH \qquad (3),$$

wherein $Y^1$, $A^1$ and $A^2$ are as described above. Also included are bisphenol compounds of general formula (4):

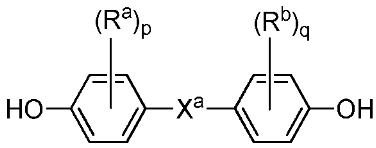 (4),

wherein $R^a$ and $R^b$ each represent a halogen atom or a monovalent hydrocarbon group and can be the same or different; p and q are each independently integers from 0 to 4; and $X^a$ represents one of the groups of formula (5):

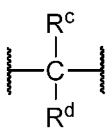 or 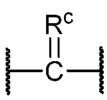 (5),

wherein $R^c$ and $R^d$ each independently represent a hydrogen atom or a monovalent linear or cyclic hydrocarbon group and $R^e$ is a divalent hydrocarbon group.

In various embodiments, a heteroatom-containing cyclic alkylidene group comprises at least one heteroatom

with a valency of 2 or greater, and at least two carbon atoms. Heteroatoms for use in the heteroatom-containing cyclic alkylidene group include - O-, -S-, and -N(Z)-, where Z is a substituent group selected from hydrogen, hydroxy, $C_{1-12}$ alkyl, $C_{1-12}$ alkoxy, or $C_{1-12}$ acyl. Where present, the cyclic alkylidene group or heteroatom-containing cyclic alkylidene group can have 3 to 20 atoms, and can be a single saturated or unsaturated ring, or fused polycyclic ring system wherein the fused rings are saturated, unsaturated, or aromatic.

In various embodiments, examples of suitable dihydroxy compounds include the dihydroxy-substituted hydrocarbons disclosed by name or formula (generic or specific) in U.S. Pat. No. 4,217,438. A nonexclusive list of specific examples of suitable dihydroxy compounds includes the following: resorcinol, 4-bromoresorcinol, hydroquinone, 4,4'-dihydroxybiphenyl, 1,6-dihydroxynaphthalene, 2,6-dihydroxy-naphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, 2,7-dihydroxycarbazole, 3,3-bis(4-hydroxyphenyl)phthalimidine, 2-phenyl-3,3-bis-(4-hydroxyphenyl)phthalimidine ("PPPBP"), and the like, as well as mixtures including at least one of the foregoing dihydroxy compounds.

In a further embodiment, examples of the types of bisphenol compounds that can be represented by formula (3) includes 1,1-bis(4-hydroxyphenyl)-methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl) n-butane, 2,2-bis(4-hydroxy-1-methylphenyl)propane, and 1,1-bis(4-hydroxy-t-butylphenyl)propane. Combinations including at least one of the foregoing dihydroxy compounds can also be used.

In various further embodiments, bisphenols containing substituted or unsubstituted cyclohexane units can be used, for example bisphenols of formula (6):

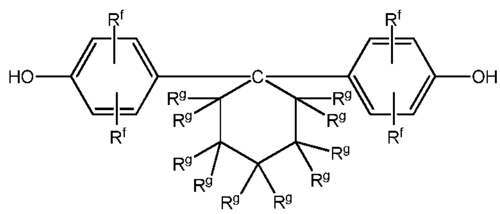
(6)

wherein each $R^f$ is independently hydrogen, $C_{1-12}$ alkyl, or halogen; and each $R^g$ is independently hydrogen or $C_{1-12}$ alkyl. The substituents can be aliphatic or aromatic, straight chain, cyclic, bicyclic, branched, saturated, or unsaturated. Such cyclohexane-containing bisphenols, for example the reaction product of two moles of a phenol with one mole of a hydrogenated isophorone, are useful for making polycarbonate polymers with high glass transition temperatures and high heat distortion temperatures. Cyclohexyl bisphenol containing polycarbonates, or a combination comprising at least one of the foregoing with other bisphenol polycarbonates, are supplied by Bayer Co. under the APEC™ trade name.

In further embodiments, additional useful dihydroxy compounds are those compounds having the formula HO-$R^1$-OH include aromatic dihydroxy compounds of formula (7):

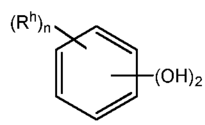
(7)

wherein each $R^h$ is independently a halogen atom, a $C_{1-10}$ hydrocarbyl such as a $C_{1-10}$ alkyl group, a halogen substituted $C_{1-10}$ hydrocarbyl such as a halogen-substituted $C_{1-10}$ alkyl group, and n is 0 to 4. The halogen is usually bromine.

In addition to the polycarbonates described above, combinations of the polycarbonate with other thermoplastic polymers, for example combinations of homopolycarbonates and/or polycarbonate copolymers, can be used.

In various embodiments, a polycarbonate can employ two or more different dihydroxy compounds or a copolymer of a dihydroxy compounds with a glycol or with a hydroxy- or acid-terminated polyester or with a dibasic acid or hydroxy acid in the event a carbonate copolymer rather than a homopolymer is desired for use. Polyarylates and polyester-carbonate resins or their blends can also be employed. Branched polycarbonates are also useful, as well as blends of linear polycarbonate and a branched polycarbonate. The branched polycarbonates can be prepared by adding a branching agent during polymerization.

In a further embodiment, the branching agents include polyfunctional organic compounds containing at least three functional groups selected from hydroxyl, carboxyl, carboxylic anhydride, haloformyl, and mixtures thereof. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents can be added at a level of from 0.05-2.0 weight percent. Branching agents and procedures for making branched polycarbonates are described in U.S. Pat. Nos. 3,635,895 and 4,001,184. All types of polycarbonate end groups are contemplated as being useful in the thermoplastic composition.

In a further embodiment, the polycarbonate can be a linear homopolymer derived from bisphenol A, in which each of $A^1$ and $A^2$ is p-phenylene and $Y^1$ is isopropylidene. The polycarbonates generally can have an intrinsic viscosity, as determined in chloroform at 25 degrees Celsius (°C), of 0.3 to 1.5 deciliters per gram (dl/g), specifically 0.45 to 1.0 dl/g. The polycarbonates can have a weight average molecular weight (Mw) of about 10,000 grams per mole (g/mol) to about 100,000 g/mol, as measured by gel permeation chromatography ("GPC") using a crosslinked styrene-divinyl benzene column, at a sample concentration of 1 milligram per milliliter, and as calibrated with polycarbonate standards. In a yet further embodiment, the polycarbonate has a Mw of about 15,000 g/mol to about 55,000 g/mol. In an even further embodiment, the polycarbonate has a Mw of about 18,000 g/mol to about 40,000 g/mol.

Polycarbonates, including isosorbide-based polyester-polycarbonate, can comprise copolymers comprising carbonate units and other types of polymer units, including ester units, and combinations comprising at least one of homopolycarbonates and copolycarbonates. An exemplary polycarbonate copolymer of this type is a polyester carbonate, also known as a polyester-polycarbonate or polyester carbonate. Such copolymers further contain carbonate units derived from oligomeric ester-containing dihydroxy compounds (also referred to herein as hydroxy end-capped oligomeric acrylate esters).

In various further embodiments, "polycarbonates" and "polycarbonate resins" as used herein further include homopolycarbonates, copolymers comprising different $R^1$ moieties in the carbonate (referred to herein as "copolycarbonates"), copolymers comprising carbonate units and other types of polymer units, such as ester units, polysiloxane units, and combinations comprising at least one of homopolycarbonates and copolycarbonates. As used herein, "combination" is inclusive of blends, mixtures, alloys, reaction products, and the like. A specific type of copolymer is a polyester carbonate, also known as a polyester-polycarbonate. Such copolymers further contain, in addition to recurring carbonate chain units of the formula (1), units of formula (8):

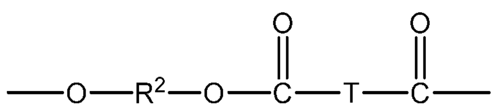 (8)

wherein $R^2$ is a divalent group derived from a dihydroxy compound, and can be, for example, a $C_{2-10}$ alkylene group, a $C_{6-20}$ alicyclic group, a $C_{6-20}$ aromatic group or a polyoxyalkylene group in which the alkylene groups contain 2 to 6 carbon atoms, specifically 2, 3, or 4 carbon atoms; and T is a divalent group derived from a dicarboxylic acid (aliphatic, aromatic, or alkyl aromatic), and can be, for example, a $C_{4-18}$ aliphatic group, a $C_{6-20}$ alkylene group, a $C_{6-20}$ alkylene group, a $C_{6-20}$ alicyclic group, a $C_{6-20}$ alkyl aromatic group, or a $C_{6-20}$ aromatic group. $R^2$ can be a $C_{2-30}$ alkylene group having a straight chain, branched chain, or cyclic (including polycyclic) structure. Alternatively, $R^2$ can be derived from an aromatic dihydroxy compound of formula (4) above, or from an aromatic dihydroxy compound of formula (7) above.

Examples of aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Examples of specific dicarboxylic acids are terephthalic acid, isophthalic acid, naphthalene dicarboxylic acid, cyclohexane dicarboxylic acid, or combinations thereof. In various embodiments, an example of a specific dicarboxylic acid comprises a combination of isophthalic acid and terephthalic acid wherein the

weight ratio of isophthalic acid to terephthalic acid is about 91:9 to about 2:98. In another embodiment, $R^2$ is a $C_{2-6}$ alkylene group and T is p-phenylene, m-phenylene, naphthalene, a divalent cycloaliphatic group, or a combination thereof. This class of polyester includes the poly(alkylene terephthalates).

In one embodiment, the thermoplastic composition may comprise a polyester-polycarbonate copolymer, and specifically a polyester-polycarbonate copolymer in which the ester units of formula (8) comprise soft block ester units, also referred to herein as aliphatic dicarboxylic acid ester units. Such a polyester-polycarbonate copolymer comprising soft block ester units is also referred to herein as a poly(aliphatic ester)-polycarbonate. The soft block ester unit can be a $C_{6-20}$ aliphatic dicarboxylic acid ester unit (where $C_{6-20}$ includes the terminal carboxyl groups), and can be straight chain (i.e., unbranched) or branched chain dicarboxylic acids, cycloalkyl or cycloalkylidene-containing dicarboxylic acids units, or combinations of these structural units. In a still further embodiment, the $C_{6-20}$ aliphatic dicarboxylic acid ester unit includes a straight chain alkylene group comprising methylene ($-CH_2-$) repeating units. In a yet further embodiment, a useful soft block ester unit comprises units of formula (8a):

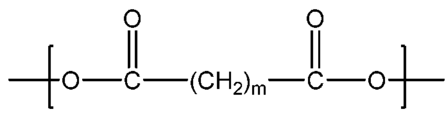

(8a)

where m is 4 to 18. In a further embodiment of formula (8a), m is 8 to 10. The poly(aliphatic ester)-polycarbonate can include less than or equal to 25 wt % of the soft block unit. In a still further embodiment, a poly(aliphatic ester)-polycarbonate comprises units of formula (8a) in an amount of 0.5 to 10 wt %, specifically 1 to 9 wt %, and more specifically 3 to 8 wt %, based on the total weight of the poly(aliphatic ester)-polycarbonate.

The poly(aliphatic ester)-polycarbonate is a copolymer of soft block ester units and carbonate units. The poly(aliphatic ester)-polycarbonate is shown in formula (8b):

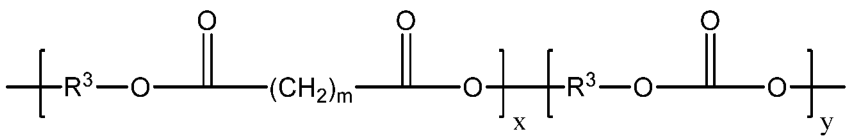

(8b)

where each $R^3$ is independently derived from a dihydroxyaromatic compound of formula (4) or (7), m is 4 to 18, and x and y each represent average weight percentages of the poly(aliphatic ester)-polycarbonate where the average weight percentage ratio x:y is 10:90 to 0.5:99.5, specifically 9:91 to 1:99, and more specifically 8:92 to 3:97, where x+y is 100.

Soft block ester units, as defined herein, can be derived from an alpha, omega $C_{6-20}$ aliphatic dicarboxylic acid or a reactive derivative thereof. In a further embodiment, the soft block ester units can be derived from an alpha, omega $C_{10-12}$ aliphatic dicarboxylic acid or a reactive derivative thereof. In a still further embodiment, the carboxylate portion of the aliphatic ester unit of formula (8a), in which the terminal carboxylate groups are connected by a chain of repeating methylene ($-CH_2-$) units (where m is as defined for formula (8a)), is derived from the corresponding dicarboxylic acid or reactive derivative thereof, such as the acid halide (specifically, the acid chloride), an ester, or the like. Exemplary alpha, omega dicarboxylic acids (from which the corresponding acid chlorides can be derived) include alpha, omega $C_6$ dicarboxylic acids such as hexanedioic acid (also referred to as adipic acid); alpha, omega $C_{10}$ dicarboxylic acids such as decanedioic acid (also referred to as sebacic acid); and alpha, omega $C_{12}$ dicarboxylic acids such as dodecanedioic acid (sometimes abbreviated as "DDDA"). It will be appreciated that the aliphatic dicarboxylic acid is not limited to these exemplary carbon chain lengths, and that other chain lengths within the $C_{6-20}$ limitation can be used. In various further embodiments, the poly(aliphatic ester)-polycarbonate having soft block ester units comprising a straight chain methylene group and a bisphenol A polycarbonate group is shown in formula (8c):

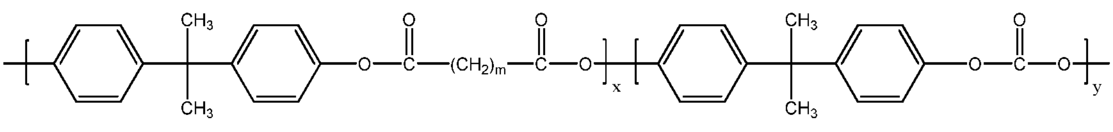

(8c)

where m is 4 to 18 and x and y are as defined for formula (8b). In a specific exemplary embodiment, a useful poly(aliphatic ester)-polycarbonate copolymer comprises sebacic acid ester units and bisphenol A carbonate units (formula (8c), where m is 8, and the average weight ratio of x:y is 6:94).

In one embodiment, polycarbonates, including polyester-polycarbonates, can be manufactured by processes such as interfacial polymerization and melt polymerization.

The polycarbonate compounds and polymers disclosed herein can, in various embodiments, be prepared by a melt polymerization process. Generally, in the melt polymerization process, polycarbonates are prepared by co-reacting, in a molten state, the dihydroxy reactant(s) (i.e., isosorbide, aliphatic diol and/or aliphatic diacid, and any additional dihydroxy compound) and a diaryl carbonate ester, such as diphenyl carbonate, or more specifically in an embodiment, an activated carbonate such as bis(methyl salicyl)carbonate, in the presence of a transesterification catalyst. The reaction can be carried out in typical polymerization equipment, such as one or more continuously stirred reactors ("CSTR"), plug flow reactors, wire wetting fall polymerizers, free fall polymerizers, wiped film polymerizers, BANBURY™ mixers, single or twin screw extruders, or combinations of the foregoing. In one embodiment, volatile monohydric phenol can be removed from the molten reactants by distillation and the polymer is isolated as a molten residue.

The melt polymerization can include a transesterification catalyst comprising a first catalyst, also referred to herein as an alpha catalyst, comprising a metal cation and an anion. In an embodiment, the cation is an alkali or alkaline earth metal comprising Li, Na, K, Cs, Rb, Mg, Ca, Ba, Sr, or a combination comprising at least one of the foregoing. The anion is hydroxide ($OH^-$), superoxide ($O^{2-}$), thiolate ($HS^-$), sulfide ($S^{2-}$), a $C_{1-20}$ alkoxide, a $C_{6-20}$ aryloxide, a $C_{1-20}$ carboxylate, a phosphate including biphosphate, a $C_{1-20}$ phosphonate, a sulfate including bisulfate, sulfites including bisulfites and metabisulfites, a $C_{1-20}$ sulfonate, a carbonate including bicarbonate, or a combination comprising at least one of the foregoing. In another embodiment, salts of an organic acid comprising both alkaline earth metal ions and alkali metal ions can also be used. Salts of organic acids useful as catalysts are illustrated by alkali metal and alkaline earth metal salts of formic acid, acetic acid, stearic acid and ethylenediaminetetraacetic acid ("EDTA"). The catalyst can also comprise the salt of a nonvolatile inorganic acid. By "nonvolatile", it is meant that the referenced compounds have no appreciable vapor pressure at ambient temperature and pressure. In particular, these compounds are not volatile at temperatures at which melt polymerizations of polycarbonate are typically conducted. The salts of nonvolatile acids are alkali metal salts of phosphites; alkaline earth metal salts of phosphites; alkali metal salts of phosphates; and alkaline earth metal salts of phosphates. Exemplary transesterification catalysts include, lithium hydroxide, sodium hydroxide, potassium hydroxide, cesium hydroxide, magnesium hydroxide, calcium hydroxide, barium hydroxide, lithium formate, sodium formate, potassium formate, cesium formate, lithium acetate, sodium acetate, potassium acetate, lithium carbonate, sodium carbonate, potassium carbonate, lithium methoxide, sodium methoxide, potassium methoxide, lithium ethoxide, sodium ethoxide, potassium ethoxide, lithium phenoxide, sodium phenoxide, potassium phenoxide, sodium sulfate, potassium sulfate, $NaH_2PO_3$, $NaH_2PO_4$, $Na_2H_2PO_3$, $KH_2PO_4$, $CsH_2PO_4$, $Cs_2H_2PO_4$, $Na_2SO_3$, $Na_2S_2O_5$, sodium mesylate, potassium mesylate, sodium tosylate, potassium tosylate, magnesium disodium ethylenediamine tetraacetate (EDTA magnesium disodium salt), or a combination comprising at least one of the foregoing. It will be understood that the foregoing list is exemplary and should not be considered as limited thereto. In one embodiment, the transesterification catalyst is an alpha catalyst comprising an alkali or alkaline earth salt. In an exemplary embodiment, the transesterification catalyst comprising sodium hydroxide, potassium hydroxide, sodium carbonate, potassium carbonate, sodium methoxide, potassium methoxide, $NaH_2PO_4$, or a combination comprising at least one of the foregoing.

The amount of alpha catalyst can vary widely according to the conditions of the melt polymerization, and can be about 0.001 to about 500 micromole ($\mu$mol). In an embodiment, the amount of alpha catalyst can be about 0.01 to about 20 $\mu$mol, specifically about 0.1 to about 10 $\mu$mol, more specifically about 0.5 to about 9 $\mu$mol, and still more specifically about 1 to about 7 $\mu$mol, per mole of aliphatic diol and any other dihydroxy compound present in the melt polymerization.

In another embodiment, a second transesterification catalyst, also referred to herein as a beta catalyst, can optionally be included in the melt polymerization process, provided that the inclusion of such a second transesterification catalyst does not significantly adversely affect the desirable properties of the polycarbonate. Exemplary transesterification catalysts can further include a combination of a phase transfer catalyst of formula $(R^3)_4Q^+X$ above, wherein each $R^3$ is the same or different, and is a $C_{1-10}$ alkyl group; Q is a nitrogen or phosphorus atom; and X is a halogen atom or a $C_{1-8}$ alkoxy group or $C_{6-18}$ aryloxy group. Exemplary phase transfer catalyst salts include, for example, $[CH_3(CH_2)_3]_4NX$, $[CH_3(CH_2)_3]_4PX$, $[CH_3(CH_2)_5]_4NX$, $[CH_3(CH_2)_6]_4NX$, $[CH_3(CH_2)_4]_4NX$, $CH_3[CH_3(CH_2)_3]_3NX$, and $CH_3[CH_3(CH_2)_2]_3NX$, wherein X is $Cl^-$, $Br^-$, a $C_{1-8}$ alkoxy group or a $C_{6-18}$ aryloxy group. Examples of such transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing. Other melt transesterification catalysts include alkaline earth metal salts or alkali metal salts. In various embodiments, where a beta catalyst is desired, the beta catalyst can be present in a molar ratio, relative to the alpha catalyst, of less than or equal to 10, specifically less than or equal to 5, more specifically less than or equal to 1, and still more specifically less than or equal to 0.5. In other embodiments, the melt polymerization reaction disclosed herein uses only an alpha catalyst as described hereinabove, and is substantially free of any beta catalyst. As defined herein, "substantially free of" can mean where the beta catalyst has been excluded from the melt polymerization reaction. In one embodiment, the beta catalyst is present in an amount of less than about 10 parts per million (ppm), specifically less than 1 ppm, more specifically less than about 0.1 ppm, more specifically less than or equal to about 0.01 ppm, and more specifically less than or equal to about 0.001 ppm, based on the total weight of all components used in the melt

polymerization reaction.

In one embodiment, an end-capping agent (also referred to as a chain-stopper) can optionally be used to limit molecular weight growth rate, and so control molecular weight in the polycarbonate. Exemplary chain-stoppers include certain monophenolic compounds (i.e., phenyl compounds having a single free hydroxy group), monocarboxylic acid chlorides, and/or monochloroformates. Phenolic chain-stoppers are exemplified by phenol and $C_1$-$C_{22}$ alkyl-substituted phenols such as p-cumyl-phenol, resorcinol monobenzoate, and p- and tertiary-butyl phenol, cresol, and monoethers of diphenols, such as p-methoxyphenol. Alkyl-substituted phenols with branched chain alkyl substituents having 8 to 9 carbon atoms can be specifically mentioned.

In another embodiment, endgroups can be derived from the carbonyl source (i.e., the diaryl carbonate), from selection of monomer ratios, incomplete polymerization, chain scission, and the like, as well as any added end-capping groups, and can include derivatizable functional groups such as hydroxy groups, carboxylic acid groups, or the like. In one embodiment, the endgroup of a polycarbonate, including a polycarbonate polymer as defined herein, can comprise a structural unit derived from a diaryl carbonate, where the structural unit can be an endgroup. In a further embodiment, the endgroup is derived from an activated carbonate. Such endgroups can be derived from the transesterification reaction of the alkyl ester of an appropriately substituted activated carbonate, with a hydroxy group at the end of a polycarbonate polymer chain, under conditions in which the hydroxy group reacts with the ester carbonyl from the activated carbonate, instead of with the carbonate carbonyl of the activated carbonate. In this way, structural units derived from ester containing compounds or substructures derived from the activated carbonate and present in the melt polymerization reaction can form ester endgroups.

In one embodiment, the melt polymerization reaction can be conducted by subjecting the reaction mixture to a series of temperature-pressure-time protocols. In some embodiments, this involves gradually raising the reaction temperature in stages while gradually lowering the pressure in stages. In one embodiment, the pressure is reduced from about atmospheric pressure at the start of the reaction to about 1 millibar (100 pascals (Pa)) or lower, or in another embodiment to 0.1 millibar (10 Pa) or lower in several steps as the reaction approaches completion. The temperature can be varied in a stepwise fashion beginning at a temperature of about the melting temperature of the reaction mixture and subsequently increased to final temperature. In one embodiment, the reaction mixture is heated from room temperature to about 150°C. In such an embodiment, the polymerization reaction starts at a temperature of about 150°C to about 220°C. In another embodiment, the polymerization temperature can be up to about 220°C. In other embodiments, the polymerization reaction can then be increased to about 250°C and then optionally further increased to a temperature of about 320°C, and all subranges there between. In one embodiment, the total reaction time can be from about 30 minutes (min) to about 200 minutes and all subranges there between. This procedure will generally ensure that the reactants react to give polycarbonates with the desired molecular weight, glass transition temperature and physical properties. The reaction proceeds to build the polycarbonate chain with production of ester-substituted alcohol by-product such as methyl salicylate. In one embodiment, efficient removal of the by-product can be achieved by different techniques such as reducing the pressure. Generally the pressure starts relatively high in the beginning of the reaction and is lowered progressively throughout the reaction and temperature is raised throughout the reaction.

In one embodiment, the progress of the reaction can be monitored by measuring the melt viscosity or the weight average molecular weight of the reaction mixture using techniques known in the art such as gel permeation chromatography. These properties can be measured by taking discrete samples or can be measured on-line. After the desired melt viscosity and/or molecular weight is reached, the final polycarbonate product can be isolated from the reactor in a solid or molten form. It will be appreciated by a person skilled in the art, that the method of making aliphatic homopolycarbonate and aliphatic-aromatic copolycarbonates as described in the preceding sections can be made in a batch or a continuous process and the process disclosed herein is preferably carried out in a solvent free mode. Reactors chosen should ideally be self-cleaning and should minimize any "hot spots." However, vented extruders similar to those that are commercially available can be used.

Polycarbonates, including polyester-polycarbonates, can be also be manufactured by interfacial polymerization. Although the reaction conditions for interfacial polymerization can vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a catalyst such as triethylamine or a phase transfer catalyst, under controlled pH conditions, e.g., about 8 to about 10. The most commonly used water immiscible solvents include methylene chloride, 1,2-dichloroethane, chlorobenzene, toluene, and the like.

Carbonate precursors include, for example, a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors can also be used. In an exemplary embodiment, an interfacial polymerization reaction to form carbonate linkages uses phosgene as a carbonate precursor, and is referred to as a phosgenation reaction.

Among the phase transfer catalysts that can be used are catalysts of the formula $(R^3)_4Q^+X$, wherein each $R^3$ is the same or different, and is a $C_{1-10}$ alkyl group; Q is a nitrogen or phosphorus atom; and X is a halogen atom or a $C_{1-8}$ alkoxy group or $C_{6-18}$ aryloxy group. Useful phase transfer catalysts include, for example, $[CH_3(CH_2)_3]_4NX$, $[CH_3(CH_2)_3]_4PX$, $[CH_3(CH_2)_5]_4NX$, $[CH_3(CH_2)_6]_4NX$, $[CH_3(CH_2)_4]_4NX$, $CH_3[CH_3(CH_2)_3]_3NX$, and $CH_3[CH_3(CH_2)_2]_3NX$, wherein X is $Cl^-$, $Br^-$, a $C_{1-8}$ alkoxy group or a $C_{6-18}$ aryloxy group. An effective amount of a phase transfer catalyst can be about 0.1 to about 10 wt % based on the weight of bisphenol in the phosgenation mixture. In another embodiment, an effective amount of phase transfer catalyst can be about 0.5 to about 2 wt % based on the weight of bisphenol in the phosgenation mixture.

All types of polycarbonate end groups are contemplated as being useful in the polycarbonate composition, provided that such end groups do not significantly adversely affect desired properties of the compositions.

Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)-benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents can be added at a level of about 0.05 to about 2.0 wt %. Mixtures comprising linear polycarbonates and branched polycarbonates can be used.

A chain stopper (also referred to as a capping agent) can be included during polymerization. The chain stopper limits molecular weight growth rate, and so controls molecular weight in the polycarbonate. Exemplary chain stoppers include certain mono-phenolic compounds, mono-carboxylic acid chlorides, and/or mono-chloroformates. Mono-phenolic chain stoppers are exemplified by monocyclic phenols such as phenol and $C_1$-$C_{22}$ alkyl-substituted phenols such as p-cumyl-phenol, resorcinol monobenzoate, and p- and tertiary-butyl phenol; and monoethers of diphenols, such as p-methoxyphenol. Alkyl-substituted phenols with branched chain alkyl substituents having 8 to 9 carbon atom can be specifically mentioned. Certain mono-phenolic UV absorbers can also be used as a capping agent, for example 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like.

Mono-carboxylic acid chlorides can also be used as chain stoppers. These include monocyclic, mono-carboxylic acid chlorides such as benzoyl chloride, $C_1$-$C_{22}$ alkyl-substituted benzoyl chloride, toluoyl chloride, halogen-substituted benzoyl chloride, bromobenzoyl chloride, cinnamoyl chloride, 4-nadimidobenzoyl chloride, and combinations thereof; polycyclic, mono-carboxylic acid chlorides such as trimellitic anhydride chloride, and naphthoyl chloride; and combinations of monocyclic and polycyclic mono-carboxylic acid chlorides. Chlorides of aliphatic monocarboxylic acids with less than or equal to about 22 carbon atoms are useful. Functionalized chlorides of aliphatic monocarboxylic acids, such as acryloyl chloride and methacryoyl chloride, are also useful. Also useful are mono-chloroformates including monocyclic, mono-chloroformates, such as phenyl chloroformate, alkyl-substituted phenyl chloroformate, p-cumyl phenyl chloroformate, toluene chloroformate, and combinations thereof.

Specifically, polyester-polycarbonates, including the poly(aliphatic ester)-polycarbonates, can be prepared by interfacial polymerization. Rather than utilizing the dicarboxylic acid (such as the alpha, omega $C_{6-20}$ aliphatic dicarboxylic acid) per se, it is possible, and sometimes even preferred, to employ the reactive derivatives of the dicarboxylic acid, such as the corresponding dicarboxylic acid halides, and in particular the acid dichlorides and the acid dibromides. Thus, for example instead of using isophthalic acid, terephthalic acid, or a combination comprising at least one of the foregoing (for poly(arylate ester)-polycarbonates), it is possible to employ isophthaloyl dichloride, terephthaloyl dichloride, and a combination comprising at least one of the foregoing. Similarly, for the poly(aliphatic ester)-polycarbonates, it is possible, and even desirable, to use for example acid chloride derivatives such as a $C_6$ dicarboxylic acid chloride (adipoyl chloride), a $C_{10}$ dicarboxylic acid chloride (sebacoyl chloride), or a $C_{12}$ dicarboxylic acid chloride (dodecanedioyl chloride). The dicarboxylic acid or reactive derivative can be condensed with the dihydroxyaromatic compound in a first condensation, followed by *in situ* phosgenation to generate the carbonate linkages with the dihydroxyaromatic compound. Alternatively, the dicarboxylic acid or derivative can be condensed with the dihydroxyaromatic compound simultaneously with phosgenation.

In an embodiment, where the melt volume rate of an otherwise compositionally suitable poly(aliphatic ester)-polycarbonate is not suitably high, i.e., where the melt volume flow rate ("MVR") is less than 13 cubic centimeters per 10 minutes (cc/10 min) when measured at 250°C., under a load of 1.2 kilograms (kg), the poly(aliphatic ester)-polycarbonate can be modified to provide a reaction product with a higher flow (i.e., greater than or equal to 13 cc/10 min when measured at 250°C., under a load of 1.2 kg), by treatment using a redistribution catalyst under conditions of reactive extrusion. During reactive extrusion, the redistribution catalyst is typically included in small amounts of less than or equal to 400 ppm by weight, by injecting a dilute aqueous solution of the redistribution catalyst into the extruder being fed with the poly(aliphatic ester)-polycarbonate.

In a further embodiment, the redistribution-catalyst is a tetraalkylphosphonium hydroxide, tetraalkylphosphonium alkoxide, tetraalkylphosphonium aryloxide, a tetraalkylphosphonium carbonate, a tetraalkylammonium hydroxide, a tetraalkylammonium carbonate, a tetraalkylammonium phosphite, a tetraalkylammonium acetate, or a combination comprising at least one of the foregoing catalysts, wherein each alkyl is independently a $C_{1-6}$ alkyl. In a specific embodiment, a useful redistribution catalyst is a tetra $C_{1-6}$ alkylphosphonium hydroxide, $C_{1-6}$ alkyl phosphonium phenoxide, or a combination comprising one or more of the foregoing catalysts. An exemplary redistribution catalyst is tetra-n-butylphosphonium hydroxide.

In a further embodiment, the redistribution catalyst is present in an amount of 40 to 120 ppm, specifically 40 to 110 ppm, and more specifically 40 to 100 ppm, by weight based on the weight of the poly(aliphatic ester)-polycarbonate.

Polycarbonates as broadly defined above can further include blends of the above polycarbonates with polyesters. Useful polyesters can include, for example, polyesters having repeating units of formula (8), which include poly(alkylene dicarboxylates), liquid crystalline polyesters, and polyester copolymers. The polyesters described herein are generally completely miscible with the polycarbonates when blended.

Such polyesters generally include aromatic polyesters, poly(alkylene esters) including poly(alkylene arylates), and poly(cycloalkylene diesters). Aromatic polyesters can have a polyester structure according to formula (8), wherein D and T are each aromatic groups as described hereinabove. In an embodiment, useful aromatic polyesters can include, for example, poly(isophthalate-terephthalate-resorcinol)esters, poly(isophthalate-terephthalate-bisphenol A)esters, poly[(isophthalate-terephthalate-resorcinol)ester-co-(isophthalate-terephthalate-bisphenol A)]ester, or a combination comprising at least one of these. Also contemplated are aromatic polyesters with a minor amount, e.g., about 0.5 to about 10 wt %, based on the total weight of the polyester, of units derived from an aliphatic diacid and/or an aliphatic polyol to make copolyesters. Poly(alkylene arylates) can have a polyester structure according to formula (8), wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5-naphthylenes; cis- or trans-1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans-1,4-(cyclohexylene)dimethylene. Examples of poly(alkylene terephthalates) include poly(ethylene terephthalate) ("PET"), poly(1,4-butylene terephthalate) ("PBT"), and poly(propylene terephthalate) ("PPT"). Also useful are poly(alkylene naphthoates), such as poly(ethylene naphthanoate) ("PEN"), and poly(butylene naphthanoate) ("PBN"). A useful poly(cycloalkylene diester) is poly(cyclohexanedimethylene terephthalate) ("PCT"). Combinations comprising at least one of the foregoing polyesters can also be used.

Copolymers comprising alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as "PETG" where the polymer comprises greater than or equal to 50 mole percent (mol %) of poly(ethylene terephthalate), and abbreviated as "PCTG" where the polymer comprises greater than 50 mol % of poly(1,4-cyclohexanedimethylene terephthalate).

Poly(cycloalkylene diester)s can also include poly(alkylene cyclohexanedicarboxylate)s. Of these, a specific example is poly(1,4-cyclohexanedimethanol-1,4-cyclohexanedicarboxylate) ("PCCD"), having recurring units of formula (9):

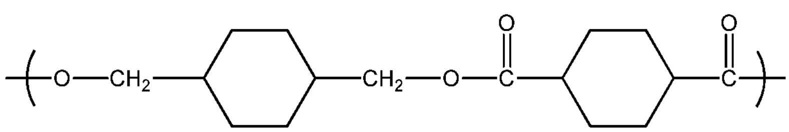

(9)

wherein, as described using formula (8), $R^2$ is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

The polyesters can be obtained by interfacial polymerization or melt-process condensation as described above, by solution phase condensation, or by transesterification polymerization wherein, for example, a dialkyl ester such as dimethyl terephthalate can be transesterified with ethylene glycol using acid catalysis, to generate poly(ethylene terephthalate). It is possible to use a branched polyester in which a branching agent, for example, a glycol having three or more hydroxyl groups or a trifunctional or multifunctional carboxylic acid has been incorporated. Furthermore, it is sometime desirable to have various concentrations of acid and hydroxyl end groups on the polyester, depending on the ultimate end use of the composition.

Polyester-polycarbonate copolymers generally can have a weight average molecular weight (Mw) of 1,500 to

100,000 g/mol, specifically 1,700 to 50,000 g/mol. In an embodiment, poly(aliphatic ester)-polycarbonates have a molecular weight of 15,000 to 45,000 g/mol, specifically 17,000 to 40,000 g/mol, more specifically 20,000 to 30,000 g/mol, and still more specifically 20,000 to 25,000 g/mol. Molecular weight determinations are performed using gel permeation chromatography (GPC), using a crosslinked styrenedivinylbenzene column and calibrated to polycarbonate references. Samples are prepared at a concentration of about 1 milligram per milliliter (mg/ml), and are eluted at a flow rate of about 1.0 milliliter per minute (ml/min).

A polyester-polycarbonate can in general have an MVR of about 5 to about 150 cc/10 min., specifically about 7 to about 125 cc/10 min, more specifically about 9 to about 110 cc/10 min, and still more specifically about 10 to about 100 cc/10 min., measured at 300°C. and a load of 1.2 kilograms according to ASTM D1238-04 or ISO 1133. Commercial polyester blends with polycarbonate are marketed under the trade name XYLEX™, including for example XYLEX™ X7300, and commercial polyester-polycarbonates are marketed under the trade name LEXAN™ SLX polymers, including for example LEXAN™ SLX-9000, and are available from SABIC Innovative Plastics (formerly GE Plastics).

In a further embodiment, the first polycarbonate polymer component is a homopolymer. In a still further embodiment, the homopolymer comprises repeating units derived from bisphenol A.

In a further embodiment, the first polycarbonate polymer component is a copolymer. In a still further embodiment, the copolymer comprises repeating units derived from BPA. In yet a further embodiment, the copolymer comprises repeating units derived from sebacic acid. In an even further embodiment, the copolymer comprises repeating units derived from sebacic acid and BPA.

In a further embodiment, the first polycarbonate polymer component has a weight average molecular weight from about 15,000 to about 75,000 g/mol, as measured by gel permeation chromatography using BPA polycarbonate standards.

In a further embodiment, the first polycarbonate polymer component is a blend comprising at least two polycarbonate polymers.

In a further embodiment, the first polycarbonate polymer component is present in an amount from about 20 wt% to about 80 wt%. In a still further embodiment, the polycarbonate polymer component is present in an amount from about 10 wt% to about 60 wt%. In yet a further embodiment, the polycarbonate polymer component is present in an amount from about 10 wt% to about 50 wt%. In an even further embodiment, the first polycarbonate polymer component is present in an amount from about 35 wt% to about 70 wt%. In a still further embodiment, the first polycarbonate polymer component is present in an amount from about 35 wt% to about 60 wt%. In a yet further embodiment, the first polycarbonate polymer component is present in an amount from about 45 wt% to about 70 wt%. In an even further embodiment, the first polycarbonate polymer component is present in an amount from about 45 wt% to about 60 wt%. In a still further embodiment, the first polycarbonate polymer component is present in an amount from about 60 wt% to about 70 wt%.

In one embodiment, the disclosed polymer compositions comprise a second polycarbonate polymer component, wherein the second polycarbonate polymer component is a branched chain polycarbonate polymer. In a further embodiment, the second polycarbonate polymer component is selected from 1,1,1-tris-hydroxy phenyl ethane branched polycarbonate, 1,1,1-tris-hydroxy phenyl ethane branched polycarbonate that is end-capped with p-hydroxybenzonitrile, and trimellitic trichloride ("TMTC") branched PC, or a mixture thereof. In a still further embodiment, the second polycarbonate polymer component comprises residues derived from tris-(hydroxyphenyl)ethane. It is understood that tris-(hydroxyphenyl)ethane also refers to 1,1,1-tris-hydroxy phenyl ethane. In a yet further embodiment, the second polycarbonate polymer component is end-capped with p-hydroxybenzonitrile.

Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents can be added at a level of about 0.05 to about 2.0 wt %. Mixtures comprising linear polycarbonates and branched polycarbonates can be used.

In various embodiments, the second polycarbonate polymer component comprises residues derived from a branching agent selected from trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid.

In some embodiments, a particular type of branching agent is used to create branched polycarbonate materials. These branched polycarbonate materials have statistically more than two end groups. The branching agent is added in an amount (relative to the bisphenol monomer) that is sufficient to achieve the desired branching content, that is, more than two end groups. The molecular weight of the polymer may become very high upon addition of the branching agent, and to avoid excess viscosity during polymerization, an increased amount of a chain stopper agent can be used, relative

to the amount used when the particular branching agent is not present. The amount of chain stopper used is generally above 5 mol% and less than 20 mol % compared to the bisphenol monomer.

Such branching agents include aromatic triacyl halides, for example triacyl chlorides of formula (17):

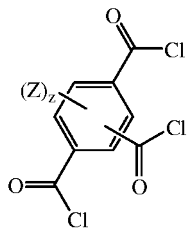

(17),

wherein Z is a halogen, $C_{1-3}$ alkyl, $C_{1-3}$ alkoxy, $C_{7-12}$ arylalkylene, $C_{7-12}$ alkylarylene, or nitro, and z is 0 to 3; a tri-substituted phenol of formula (18)

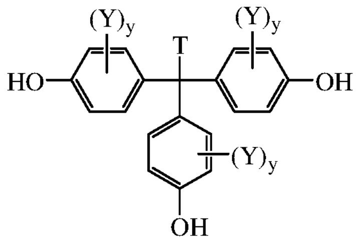

(18),

wherein T is a $C_{1-20}$ alkyl, $C_{1-20}$ alkyleneoxy, $C_{7-12}$ arylalkyl, or $C_{7-12}$ alkylaryl, Y is a halogen, $C_{1-3}$ alkyl, $C_{1-3}$ alkoxy, $C_{7-12}$ arylalkyl, $C_{7-12}$ alkylaryl, or nitro, y is 0 to 4; or a compound of formula (19) (isatin-bis-phenol):

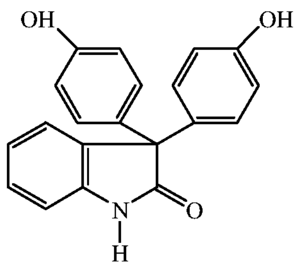

(19).

Examples of specific branching agents that are particularly effective in the compositions include trimellitic trichloride ("TMTC"), tris-p-hydroxyphenylethane ("THPE"), and isatin-bis-phenol. In various embodiments, the second polycarbonate polymer component comprises residues derived from a branching agent selected from trimellitic trichloride ("TMTC"), tris-p-hydroxyphenylethane, or alternatively referred to as tris-(hydroxyphenyl)ethane or 1,1,1-tris-hydroxy phenyl ethane ("THPE"), and isatin-bis-phenol. In a further embodiment, the second polycarbonate polymer component comprises residues derived from branching agent trimellitic trichloride ("TMTC"). In a still further embodiment, the second polycarbonate polymer component comprises residues derived from the branching agent tris-(hydroxyphenyl)ethane. In a yet a further embodiment, the second polycarbonate polymer component comprises residues derived from the branching agent isatin-bis-phenol.

The amount of the branching agents used in the manufacture of the polymer will depend on a number of considerations, for example the type of $R^1$ groups, the amount of chain stopper, e.g., cyanophenol, and the desired molecular weight of the polycarbonate. In general, the amount of branching agent is effective to provide 0.1 to 10 branching units per 100 $R^1$ units, specifically 0.5 to 8 branching units per 100 $R^1$ units, and more specifically 0.75 to 5 branching units per 100 $R^1$ units. For branching agents having formula (9), the branching agent triester groups are present in an amount of 0.1 to 10 branching units per 100 $R^1$ units, specifically 0.5 to 8 branching units per 100 $R^1$ units, and more specifically 0.75 to 5 branching agent triester units per 100 $R^1$ units. For branching agents having formula (10) or (11), the branching agent triphenyl carbonate groups formed are present in an amount of 0.1 to 10 branching units per 100 $R^1$ units, specifically 0.5 to 8 branching units per 100 $R^1$ units, and more specifically 0.75 to 5 triphenylcarbonate units per 100 $R^1$ units. In some embodiments, a combination of two or more branching agents may be used. Alternatively,

the branching agents can be added at a level of 0.05 to 2.0 wt.%.

In an embodiment, the polycarbonate is a branched polycarbonate comprising units as described above; greater than or equal to 3 mol%, based on the total moles of the polycarbonate, of moieties derived from a branching agent; and end-capping groups derived from an end-capping agent having a $pK_a$ between 8.3 and 11. The branching agent can comprise trimellitic trichloride, 1,1,1-tris(4-hydroxyphenyl)ethane or a combination of trimellitic trichloride and 1,1,1-tris(4-hydroxyphenyl)ethane, and the end-capping agent is phenol or a phenol containing a substituent of cyano group, aliphatic groups, olefinic groups, aromatic groups, halogens, ester groups, ether groups, or a combination comprising at least one of the foregoing. In various embodiments, the end-capping agent is phenol, p-t-butylphenol, p-methoxyphenol, p-cyanophenol, p-cumylphenol ("PCP"), p-hydroxybenzonitrile, or a combination comprising at least one of the foregoing. In a further embodiment, the end-capping agent is phenol, p-t-butylphenol, p-methoxyphenol, p-cyanophenol, p-cumylphenol, or a combination comprising at least one of the foregoing.

In a further embodiment, the branched chain polycarbonate polymer component is made by the interfacial process.

In various embodiments, the second polycarbonate polymer component comprises residues derived from BPA.

In a further embodiment, the second polycarbonate polymer component is present in an amount from about 1 wt% to about 30 wt%. In a still further embodiment, the second polycarbonate polymer component is present in an amount from about 1 wt% to about 25 wt%. In yet a further embodiment, the second polycarbonate polymer component is present in an amount from about 1 wt% to about 20 wt%. In an even further embodiment, the second polycarbonate polymer component is present in an amount from about 5 wt% to about 25 wt%. In a still further embodiment, the second polycarbonate polymer component is present in an amount from about 5 wt% to about 30 wt%. In a yet further embodiment, the second polycarbonate polymer component is present in an amount from about 10 wt% to about 15 wt%. In an even further embodiment, the second polycarbonate polymer component is present in an amount from about 10 wt% to about 20 wt%. In a still further embodiment, the second polycarbonate polymer component is present in an amount from about 15 wt% to about 20 wt%.

In one embodiment, the disclosed polymer compositions comprise at least one polycarbonate-polysiloxane copolymer component. The polysiloxane (also referred to herein as "polydiorganosiloxane") blocks of the copolymer comprise repeating siloxane units (also referred to herein as "diorganosiloxane units") of formula (10):

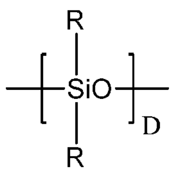

(10)

wherein each occurrence of R is same or different, and is a $C_{1-13}$ monovalent organic radical. For example, R can independently be a $C_1$-$C_{13}$ alkyl group, $C_1$-$C_{13}$ alkoxy group, $C_2$-$C_{13}$ alkenyl group, $C_2$-$C_{13}$ alkenyloxy group, $C_3$-$C_6$ cycloalkyl group, $C_3$-$C_6$ cycloalkoxy group, $C_6$-$C_{14}$ aryl group, $C_6$-$C_{10}$ aryloxy group, $C_7$-$C_{13}$ arylalkyl group, $C_7$-$C_{13}$ arylalkoxy group, $C_7$-$C_{13}$ alkylaryl group, or $C_7$-$C_{13}$ alkylaryloxy group. The foregoing groups can be fully or partially halogenated with fluorine, chlorine, bromine, or iodine, or a combination thereof. Combinations of the foregoing R groups can be used in the same copolymer.

The value of D in formula (10) can vary widely depending on the type and relative amount of each component in the thermoplastic composition, the desired properties of the composition, and like considerations. Generally, D can have an average value of 2 to 1,000, specifically 2 to 500, more specifically 5 to 100. In some applications, D can have an average value of 30 to 60. An exemplary siloxane block can have an average D value of 45.

Where D is of a lower value, e.g., less than 40, it can be desirable to use a relatively larger amount of the polycarbonate-polysiloxane copolymer. Conversely, where D is of a higher value, e.g., greater than 40, it can be necessary to use a relatively lower amount of the polycarbonate-polysiloxane copolymer.

A combination of a first and a second (or more) polysiloxane-polycarbonate copolymer can be used, wherein the average value of D of the first copolymer is less than the average value of D of the second copolymer.

In one embodiment, the polydiorganosiloxane blocks are provided by repeating structural units of formula (11):

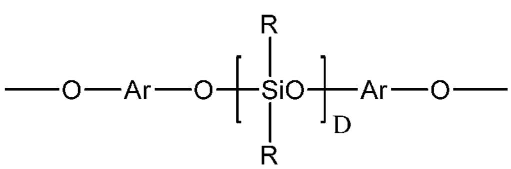

(11)

wherein D is as defined above; each R can independently be the same or different, and is as defined above; and each Ar can independently be the same or different, and is a substituted or unsubstituted $C_6$-$C_{30}$ arylene radical, wherein the bonds are directly connected to an aromatic moiety. Useful Ar groups in formula (11) can be derived from a $C_6$-$C_{30}$ dihydroxyarylene compound, for example a dihydroxyarylene compound of formula (3), (4), or (7) above. Combinations comprising at least one of the foregoing dihydroxyarylene compounds can also be used. Specific examples of dihydroxyarylene compounds are 1,1-bis(4-hydroxyphenyl)methane, 1,1-bis(4-hydroxyphenyl)ethane, 2,2-bis(4-hydroxyphenyl)propane, 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, 1,1-bis(4-hydroxyphenyl)cyclohexane, bis(4-hydroxyphenyl sulphide), and 1,1-bis(4-hydroxy-t-butylphenyl)propane. Combinations comprising at least one of the foregoing dihydroxy compounds can also be used.

Units of formula (11) can be derived from the corresponding dihydroxy compound of formula (12):

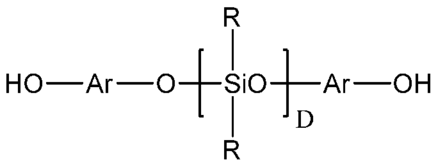

(12)

wherein R, Ar, and D are as described above. Compounds of formula (12) can be obtained by the reaction of a dihydroxyarylene compound with, for example, an alpha, omega-bisacetoxypolydiorganosiloxane under phase transfer conditions.

In another embodiment, polydiorganosiloxane blocks comprise units of formula (13):

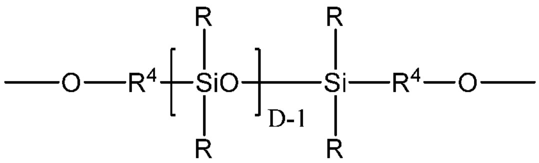

(13)

wherein R and D are as described above, and each occurrence of $R^4$ is independently a divalent $C_1$-$C_{30}$ alkylene, and wherein the polymerized polysiloxane unit is the reaction residue of its corresponding dihydroxy compound. In a specific embodiment, the polydiorganosiloxane blocks are provided by repeating structural units of formula (14):

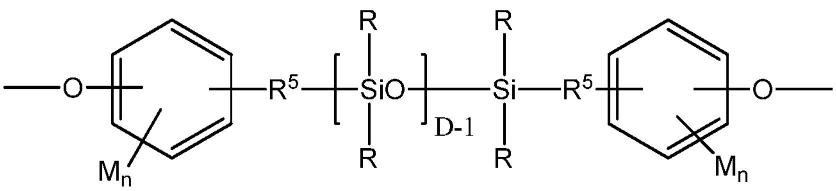

(14)

wherein R and D are as defined above. Each $R^5$ in formula (14) is independently a divalent $C_2$-$C_8$ aliphatic group. Each M in formula (14) can be the same or different, and can be a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ arylalkyl, $C_7$-$C_{12}$ arylalkoxy, $C_7$-$C_{12}$ alkylaryl, or $C_7$-$C_{12}$ alkylaryloxy, wherein each n is independently 0, 1, 2, 3, or 4.

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; $R^5$ is a dimethylene, trimethylene or tetramethylene group; and R is a $C_{1-8}$ alkyl, haloalkyl such as trifluoropropyl, cyanoalkyl, or aryl such as phenyl, chlorophenyl or tolyl. In another embodiment, R is methyl, or a mixture of methyl and trifluoropropyl, or a mixture of methyl and phenyl. In still another embodiment, M is methoxy, n is one, $R^5$ is a divalent $C_1$-$C_3$ aliphatic group, and R is methyl.

Units of formula (14) can be derived from the corresponding dihydroxy polydiorganosiloxane (15):

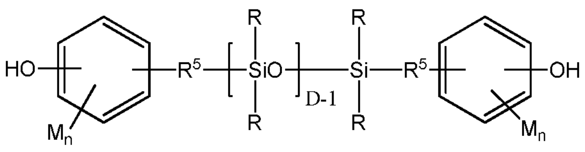

(15)

wherein R, D, M, $R^5$, and n are as described above. Such dihydroxy polysiloxanes can be made by effecting a platinum catalyzed addition between a siloxane hydride of formula (16):

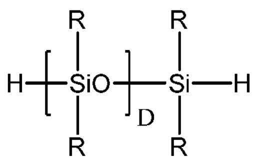

(16)

wherein R and D are as previously defined, and an aliphatically unsaturated monohydric phenol. Useful aliphatically unsaturated monohydric phenols included, for example, eugenol, 2-allylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Mixtures comprising at least one of the foregoing can also be used.

Exemplary polysiloxane-polycarbonates comprise polysiloxane units derived from dimethylsiloxane units (e.g., formula (11) where R is methyl), and carbonate units derived from bisphenol A, e.g., the dihydroxy compound of formula (3) in which each of $A^1$ and $A^2$ is p-phenylene and $Y^1$ is isopropylidene. Polysiloxane-polycarbonates can have a weight average molecular weight of 2,000 to 100,000 g/mol, specifically 5,000 to 50,000 g/mol. Some specific polysiloxane-polycarbonates have, for example, a weigh average molecular weight of 15,000 to 45,000 g/mol. Molecular weights referred to herein are as measured by gel permeation chromatography using a crosslinked styrene-divinyl benzene column, at a sample concentration of about 1 mg/ml, and as calibrated with polycarbonate standards.

In various embodiments, the polycarbonate-polysiloxane copolymer component is a polycarbonate-polysiloxane block copolymer. In a further embodiment, the polycarbonate block of the polycarbonate-polysiloxane block copolymer comprises residues derived from BPA. In a still further embodiment, the polycarbonate block of the polycarbonate-polysiloxane block copolymer is a homopolymer. In a yet further embodiment, the polysiloxane block of the polycarbonate-polysiloxane block copolymer comprises dimethylsiloxane repeating units.

In various embodiments, the polycarbonate-polysiloxane copolymer component comprises a polysiloxane block from about 5 wt% to about 30 wt% of the polycarbonate-polysiloxane copolymer component. In a further embodiment, the polycarbonate-polysiloxane copolymer component comprises a polysiloxane block from about 10 wt% to about 25 wt% of the polycarbonate-polysiloxane copolymer component. In a still further embodiment, the polycarbonate-polysiloxane copolymer component comprises a polysiloxane block from about 15 wt% to about 25 wt% of the polycarbonate-polysiloxane copolymer component. In an even further embodiment, the polycarbonate-polysiloxane copolymer component comprises a polysiloxane block from about 17.5 wt% to about 22.5 wt% of the polycarbonate-polysiloxane copolymer component. In a still further embodiment, the polycarbonate-polysiloxane copolymer component comprises a polysiloxane block from about 19 wt% to about 21 wt% of the polycarbonate-polysiloxane copolymer component.

In a further embodiment, the polycarbonate-polysiloxane copolymer component comprises a polysiloxane block less than or equal to about 25 wt% of the polycarbonate-polysiloxane copolymer component. In a still further embodiment, the polycarbonate-polysiloxane copolymer component comprises a polysiloxane block less than or equal to about 22.5 wt% of the polycarbonate-polysiloxane copolymer component. In a yet further embodiment, the polycarbonate-polysiloxane copolymer component comprises a polysiloxane block less than or equal to about 20 wt% of the polycarbonate-polysiloxane copolymer component.

In a further embodiment, the polycarbonate-polysiloxane copolymer is present in an amount from about 1 wt% to about 30 wt%. In a still further embodiment, the polycarbonate-polysiloxane copolymer component is present from about 1 wt% to about 20 wt%. In a yet further embodiment, the polycarbonate-polysiloxane copolymer is present in an amount from about 1 wt% to about 25 wt%. In an even further embodiment, the polycarbonate-polysiloxane copolymer component is present in an amount from about 5 wt% to about 20 wt%. In a still further embodiment, the polycarbonate-polysiloxane copolymer component is present in an amount from about 5 wt% to about 25 wt%. In a yet further embodiment, the polycarbonate-polysiloxane copolymer component is present in an amount from about 5 wt% to about 30 wt%. In an even further embodiment, the polycarbonate-polysiloxane copolymer component is present in an amount from about 10 wt% to about 25 wt%. In a still further embodiment, the polycarbonate-polysiloxane copolymer component is present in an amount from about 10 wt% to about 20 wt%. In a yet further embodiment, the polycarbonate-polysiloxane

copolymer component is present in an amount from about 10 wt% to about 15 wt%. In an even further embodiment, the polycarbonate-polysiloxane copolymer component is present in an amount from about 15 wt% to about 25 wt%. In a still further embodiment, the polycarbonate-polysiloxane copolymer component is present in an amount from about 15 wt% to about 20 wt%.

In a further embodiment, the polycarbonate-polysiloxane copolymer component comprises a blend of polycarbonate-polysiloxane copolymers.

In one embodiment, the blended thermoplastic compositions of the present invention comprise a thermally conductive filler. In a further embodiment, the thermally conductive filler is selected from AlN, $Al_4C_3$, $Al_2O_3$, BN, AlON, $MgSiN_2$, SiC, $Si_3N_4$, graphite, expanded graphite, grapheme, carbon fiber, ZnS, CaO, MgO, ZnO, $TiO_2$, $H_2Mg_3(SiO_3)_4$, $CaCO_3$, $Mg(OH)_2$, mica, BaO, γ-AlO(OH), α-AlO(OH), $Al(OH)_3$, $BaSO_4$, $CaSiO_3$, $ZrO_2$, $SiO_2$, a glass bead, a glass fiber, MgO•x$Al_2O_3$, $CaMg(CO_3)_2$, and a clay, or a combinations thereof.

In a further embodiment, the thermally conductive filler component comprises at least one high thermally conductive filler. In a still further embodiment, the high thermally conductive filler has a conductivity greater than or equal to about 30 W/mK when determined in accordance with ASTM E1225.

Examples of high thermally conductive filler include, but are not limited to, AlN (aluminum nitride), $Al_4C_3$ (aluminum carbide), $Al_2O_3$ (aluminum oxide), BN (boron nitride), AlON (aluminum oxynitride), $MgSiN_2$ (magnesium silicon nitride), SiC (silicon carbide), $Si_3N_4$ (silicon nitride), graphite, expanded graphite, graphene, and carbon fiber, or combinations thereof. In a further embodiment, the high thermally conductive filler is selected from AlN, $Al_4C_3$, $Al_2O_3$, BN, AlON, $MgSiN_2$, SiC, $Si_3N_4$, graphite, expanded graphite, graphene, and carbon fiber, or combinations thereof. In a still further embodiment, the high thermally conductive filler is selected from AlN, $Al_2O_3$, BN, SiC, graphite, expanded graphite, and carbon fiber, or combinations thereof. In yet a further embodiment, the high thermally conductive filler is selected from BN, graphite, and expanded graphite, or combinations thereof.

The graphite used in the present invention can be synthetically produced or naturally produced, or can be expandable graphite or expanded graphite with a thickness smaller than 1 micrometer (μm). In one embodiment, the graphite is naturally produced. There are three types of naturally produced graphite that are commercially available. They are flake graphite, amorphous graphite and crystal vein graphite. In one embodiment, the graphite is flake graphite, wherein the flake graphite is typically found as discrete flakes ranging in size from 10-800 μm in diameter and 1-150 μm thick and purities ranging from 80-99.9% carbon. In another embodiment the graphite is spherical.

The boron nitride used in the invention is typically hexagonal boron nitride (h-BN), which can be complete h-BN or turbostratic boron nitride (t-BN). The BN particle can be large sized single BN crystal powder, agglomerate of small sized BN particles, the mixture thereof, the agglomerated spherical powder, or BN fiber. In one embodiment, the BN average particle size or D50 in diameter can range from 1 to 500 μm. In another embodiment, within this range, the boron nitride particles have a size of greater than or equal to about 3, or greater than or equal to about 5 μm. The particle size indicated here means the single BN particle or its agglomerate at any of their dimensions. In one embodiment, the BN has a BN purity ranging from 95% to 99.8%. In one embodiment, a large single crystal sized flake BN with an average size ranging from 3 to 50 μm and a BN purity of over 98% is used.

In a further embodiment, the thermally conductive filler component comprises at least one intermediate thermally conductive filler. In a further embodiment, the intermediate thermally conductive filler component has a conductivity from about 10 W/mK to about 30 W/mK when determined in accordance with ASTM E1225.

Examples of intermediate thermally conductive fillers include, but are not limited to, ZnS, CaO, MgO, ZnO, and $TiO_2$, or combinations thereof. In a further embodiment, the intermediate thermally conductive filler is $TiO_2$.

In a further embodiment, the thermally conductive filler component comprises at least one low thermally conductive filler. In a further embodiment, the low thermally conductive filler component has a conductivity less than about 10 W/mK when determined in accordance with ASTM E1225.

Examples of low thermally conductive fillers include, but are not limited to, $H_2Mg_3(SiO_3)_4$, $CaCO_3$, $Mg(OH)_2$, mica, BaO, γ-AlO(OH), α-AlO(OH), $Al(OH)_3$, $BaSO_4$, $CaSiO_3$, $ZrO_2$, $SiO_2$, a glass bead, a glass fiber, MgO•x$Al_2O_3$, $CaMg(CO_3)_2$, and clay.). In a further embodiment, the low thermally conductive filler is selected from $H_2Mg_3(SiO_3)_4$, $Mg(OH)_2$, γ-AlO(OH), α-AlO(OH), and $Al(OH)_3$, or combinations thereof.. In a still further embodiment, the low thermally conductive filler is selected from $H_2Mg_3(SiO_3)_4$, γ-AlO(OH), α-AlO(OH), and $Al(OH)_3$, or combinations thereof. In yet a further embodiment, the low thermally conductive filler is $H_2Mg_3(SiO_3)_4$.

In a further embodiment, the thermally conductive filler component is present in an amount from about 1 wt% to about 50 wt%. In a still further embodiment, the thermally conductive filler component is present in an amount from about 10 wt% to about 50 wt%. In yet a further embodiment, the thermally conductive filler component is present in an amount from about 20 wt% to about 40 wt%. In an even further embodiment, the thermally conductive filler is present in an amount from about 5 wt% to about 50 wt%. In a still further embodiment, the thermally conductive filler is present in an amount from about 5 wt% to about 45 wt%. In yet a further embodiment, the thermally conductive filler is present in an amount from about 5 wt% to about 30 wt%.

In a further embodiment, the thermally conductive filler component comprises at least one intermediate thermally

conductive filler, wherein the intermediate thermally conductive filler component has a conductivity from about 10 W/mK to about 30 W/mK when determined in accordance with ASTM E1225, and at least one low thermally conductive filler, wherein the low thermally conductive filler component has a conductivity less than about 10 W/mK when determined in accordance with ASTM E1225.

In a further embodiment, the thermally conductive filler component comprising at least one intermediate thermally conductive filler and at least one low thermally conductive filler is present in an amount from about 1 wt% to about 50 wt%. In a still further embodiment, the thermally conductive filler component comprising at least one intermediate thermally conductive filler and at least one low thermally conductive filler is present in an amount from about 10 wt% to about 50 wt%.

In a further embodiment, the thermally conductive filler component comprising at least one intermediate thermally conductive filler and at least one low thermally conductive filler, wherein the intermediate thermally conductive filler is present in an amount from about 5 wt% to about 20 wt%, and wherein the low thermally conductive filler is present in an amount from about 5 wt% to about 20 wt%. In a still further embodiment, the thermally conductive filler component comprising at least one intermediate thermally conductive filler and at least one low thermally conductive filler, wherein the intermediate thermally conductive filler is present in an amount from about 10 wt% to about 20 wt%, and wherein the low thermally conductive filler is present in an amount from about 10 wt% to about 20 wt%. In a yet further embodiment, the thermally conductive filler component comprising at least one intermediate thermally conductive filler and at least one low thermally conductive filler, wherein the intermediate thermally conductive filler is present in an amount from about 15 wt% to about 20 wt%, and wherein the low thermally conductive filler is present in an amount from about 15 wt% to about 20 wt%.

In a further embodiment, the thermally conductive filler comprises $TiO_2$ and $H_2Mg_3(SiO_3)_4$.

In various embodiments, the thermally conductive filler comprises $TiO_2$ and $H_2Mg_3(SiO_3)_4$, present together in an amount from about 1 wt% to about 50 wt%. In a further embodiment, the thermally conductive filler comprises $TiO_2$ and $H_2Mg_3(SiO_3)_4$, present together in an amount from about 10 wt% to about 50 wt%.

In various embodiments, the thermally conductive filler comprises $TiO_2$ and $H_2Mg_3(SiO_3)_4$, wherein the $TiO_2$ is present in an amount from about 5 wt% to about 20 wt% and wherein the $H_2Mg_3(SiO_3)_4$ is present in an amount in an amount from about 5 wt% to about 20 wt%. In a further embodiment, the thermally conductive filler comprises $TiO_2$ and $H_2Mg_3(SiO_3)_4$, wherein the $TiO_2$ is present in an amount from about 10 wt% to about 20 wt% and wherein the $H_2Mg_3(SiO_3)_4$ is present in an amount in an amount from about 10 wt% to about 20 wt%. In a still further embodiment, the thermally conductive filler comprises $TiO_2$ and $H_2Mg_3(SiO_3)_4$, wherein the $TiO_2$ is present in an amount from about 15 wt% to about 20 wt% and wherein the $H_2Mg_3(SiO_3)_4$ is present in an amount in an amount from about 15 wt% to about 20 wt%.

In various embodiments, the disclosed polymer compositions further comprise a polyester polymer component. In a further embodiment, the polyester polymer is polybutylene terephthalate, alternatively referred to as poly(1,4-butylene terephthalate) or PBT. In a still further embodiment, the polyester polymer is polyethylene terephthalate, alternatively referred to as poly(ethylene terephthalate) or PET.

In a further embodiment, the polyester polymer component is present in an amount great than about 0 wt% to about 20 wt%. In a still further embodiment, the polyester polymer component is present in an amount great than about 0 wt% to about 10 wt%. In yet a further embodiment, the polyester polymer component is present in an amount great than about 1 wt% to about 20 wt%. In an even further embodiment, the polyester polymer component is present in an amount great than about 1 wt% to about 10 wt%. In a still further embodiment, the polyester polymer component is present in an amount great than about 5 wt% to about 15 wt%.

In a further embodiment, the polycondensation of terephthalic acid and ethylene glycol by an ester exchange reaction or direct esterification reaction can be used to prepare a suitable PET for use in the disclosed blended polycarbonate compositions. In a still further embodiment, PET can be prepared by the esterification of ethylene glycol and terephthalic acid or by the ester interchange of dimethyl terephthalate with ethylene glycol, followed by polycondensation in the presence of a catalyst such as antimony trioxide, at a temperature of about 285°C. and at a pressure of about 1 millimeter of mercury. The PET reaction product can then be extruded at a temperature of about 285°C. and a pressure of one atmosphere into water and allowed to solidify therein. The solid PET can then be pelletized by means known to those skilled in this art. For example, the PET can be pelletized using an underwater pelletizer. It is known that the intrinsic viscosity of PET can be increased by solid state polymerization in the presence of an inert gas such as nitrogen (see, e.g., U.S. Patent No. 4,064,112).

It should be noted that the terms "polyethylene terephthalate" and "PET" as used herein are meant to include PET no matter how prepared. Furthermore, these terms are meant to include polyethylene terephthalate polymers which are reacted with minor, e.g., less than about 20 wt% of the polymer, amounts of modifying agents. Such modifying agents include various diols such as 1,4 butane diol, cyclohexane dimethanol and 1,3 propane diol. Other modifying agents include various diacids such as isophthalic acid, adipic acid, 2,6 naphthalene dicarboxylic acid and p-hydroxy benzoic acid. Minor amounts of chain branching agents and/or chain terminating agents can also be used. Such chain branching agents include, for example, polyfunctional acids and/or polyfunctional alcohols such as trimethylol propane and pentaerythritol. Chain terminating agents include monofunctional alcohols and/or monofunctional carboxylic acids such as stearic acid and benzoic acid. Mixtures of the chain branching and chain terminating agents can also be used. PET which contains such chain branching agents and chain terminating agents is described in U.S. Patent No. 4,161,579.

In various embodiments, the disclosed polymer compositions further comprise an impact modifier polymer component. In a further embodiment, the impact modifier component comprises at least one acrylonitrile-butadiene-styrene ("ABS") polymer, at least one bulk polymerized ABS ("BABS") polymer, or at least one methyl methacrylate-butadiene-styrene ("MBS") polymer. In a still further embodiment, the impact modifier component comprises a methyl methacrylate-butadiene-styrene (MBS) polymer. In yet a further embodiment, the impact modifier component comprises an acrylonitrile-butadiene-styrene (ABS) polymer composition.

In a further embodiment, the ABS polymer composition is a bulk-polymerized ABS. In a still further embodiment, the ABS polymer composition is a styrene acrylonitrile ("SAN")-grafted emulsion ABS.

In a further embodiment, the impact modifier is present in an amount greater than 0 wt% to about 30 wt%. In a still further embodiment, the impact modifier is present in an amount greater than 0 wt% to about 20 wt%. In yet a further embodiment, the impact modifier is present in an amount greater than 0 wt% to about 10 wt%. In an even further embodiment, the impact modifier is present in an amount greater than about 1 wt% to about 10 wt%. In a still further embodiment, the impact modifier is present in an amount greater than about 5 wt% to about 15 wt%.

In various embodiments, the disclosed blended thermoplastic compositions further comprise a reinforcing component to increase the stiffness (e.g. modulus and tensile strength). Examples of suitable fillers or reinforcing agents include any materials known for these uses, provided that they do not adversely affect the desired properties. For example, suitable fillers and reinforcing agents include silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as $TiO_2$, aluminum oxide, magnesium oxide, or the like; calcium sulfate (as its anhydride, dehydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix resin, or the like; single crystal fibers or "whiskers" such as silicon carbide, alumina, boron carbide, iron, nickel, copper, or the like; fibers (including continuous and chopped fibers) such as asbestos, carbon fibers, glass fibers, such as E, A, C, ECR, R, S, D, or NE glasses, or the like; sulfides such as molybdenum sulfide, zinc sulfide, or the like; barium compounds such as barium titanate, barium ferrite, barium sulfate, heavy spar, or the like; metals and metal oxides such as particulate or fibrous aluminum, bronze, zinc, copper and nickel, or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as kenaf, cellulose, cotton, sisal, jute, flax, starch, corn flour, lignin, ramie, rattan, agave, bamboo, hemp, ground nut shells, corn, coconut (coir), rice grain husks or the like; organic fillers such as polytetrafluoroethylene, reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, Tripoli, diatomaceous earth, carbon black, or the like, or combinations comprising at least one of the foregoing fillers or reinforcing agents. In a still further embodiment, the filler is talc, glass fiber, kenaf fiber, or combinations thereof. In yet a further embodiment, the filler is glass fiber. The fillers and reinforcing agents can be coated with a layer of metallic material to facilitate conductivity, or surface treated with silanes, siloxanes, or a combination of silanes and siloxanes to improved adhesion and dispersion with the polymeric matrix resin.

In a further embodiment, the reinforcing filler is selected from glass beads, glass fiber, glass flakes, mica, talc, clay, wollastonite, zinc sulfide, zinc oxide, carbon fiber, ceramic-coated graphite, and titanium dioxide. In a still further embodiment, the reinforcing filler is a glass fiber. In yet a further embodiment, the glass fiber is continuous. In an even further embodiment, the glass fiber is chopped.

In a further embodiment, the glass fiber has a round, flat, or irregular cross-section. In a still further embodiment, the glass fiber has a round cross-section. In a still further embodiment, the glass fiber has a diameter from about 4 $\mu$m to about 15 $\mu$m.

In a further embodiment, the glass fiber would be surface treated by amino silane, wax, and epoxy silane, or a mixture thereof. In a still further embodiment, the glass fiber would be non-surface treated.

In a further embodiment, the reinforcing fillers can be provided in the form of monofilament or multifilament fibers and can be used either alone or in combination with other types of fiber, for example, co-weaving or core/sheath, side-by-side, orange-type or matrix and fibril constructions, or by other methods known to one skilled in the art of fiber

manufacture. Suitable co-woven structures include, for example, glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

In various embodiments, the reinforcing fillers can be surface-treated with a surface treatment agent containing a coupling agent. Suitable coupling agents include, but are not limited to, silane-based coupling agents, or titanate-based coupling agents, or a mixture thereof. Applicable silane-based coupling agents include aminosilane, epoxysilane, amidosilane, azidosilane and acrylsilane.

In a further embodiment, the reinforcing filler is particulate.

In a further embodiment, the reinforcing filler is fibrous. In a still further embodiment, the fibrous filler has a circular cross-section. In yet a further embodiment, the fibrous filler has a non-circular cross-section.

In a further embodiment, the reinforcing filler is present in an amount greater than 0 wt% to about 50 wt%. In a still further embodiment, the reinforcing filler is present in an amount greater than 0 wt% to about 40 wt%. In a yet further embodiment, the reinforcing filler is present in an amount greater than 0 wt% to about 30 wt%. In an even further embodiment, the reinforcing filler is present in an amount greater than 0 wt% to about 25 wt%. In a still further embodiment, the reinforcing filler is present in an amount greater than 0 wt% to about 20 wt%. In a still further embodiment, the reinforcing filler is present in an amount greater than 0 wt% to about 15 wt%.

In various embodiments, the disclosed polymer compositions further comprise at least one flame retardant, wherein the flame retardant can comprise any flame retardant material or mixture of flame retardant materials suitable for use in the inventive polymer compositions. In various embodiments, the flame retardant is a phosphorus-containing flame retardant. In a further embodiment, the flame retardant is selected from oligomeric phosphate flame retardant, polymeric phosphate flame retardant, an aromatic polyphosphate flame retardant, oligomeric phosphonate flame retardant, phenoxyphosphazene oligomeric flame retardant, or mixed phosphate/phosphonate ester flame retardant compositions. In a still further embodiment, the flame retardant comprises a halogen containing material. In a yet further embodiment, the flame retardant is free of or substantially free of one or more of phosphate and/or a halogen. In an even further embodiment, the flame retardant is free of or substantially free of a halogen.

In a further embodiment, the blended thermoplastic compositions further comprise a flame retardant selected from organic compounds that include phosphorous, bromine, and/or chlorine. Non-brominated and non-chlorinated phosphorous-containing compounds can be preferred in certain applications for regulatory reasons, for example, organic phosphates and organic compounds containing phosphorous-nitrogen bonds. Exemplary organic phosphates can include an aromatic phosphate of the formula $(GO)_3P=O$, wherein each G is independently an alkyl, cycloalkyl, aryl, alkaryl, or aralkyl group, provided that at least one G is an aromatic group. Two of the G groups can be joined together to provide a cyclic group, for example, diphenyl pentaerythritol diphosphate, which is described by Axelrod in U.S. Pat. No. 4,154,775. Other suitable aromatic phosphates can be, for example, phenyl bis(dodecyl)phosphate, phenyl bis(neopently)phosphate, phenyl bis(3,5,5'-trimethylhexyl)phosphate, ethyl diphenyl phosphate, 2-ethylhexyl di(p-tolyl)phosphate, bis (2-ethylhexyl)p-tolyl phosphate, tritolyl phosphate, bis(2-ethylhexyl)phenyl phosphate, dibutyl phenyl phosphate, 2-chloroethyl diphenyl phosphate, p-tolyl bis(2,5,5'-trimethylhexyl)phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

In a further embodiment, di- or polyfunctional aromatic phosphorous-containing compounds can also be present. Examples of suitable di- or polyfunctional aromatic phosphorous-containing compounds include triphenyl phosphate ("TPP"), resorcinol tetraphenyl diphosphate ("RDP"), the bis(diphenyl)phosphate of hydroquinone and the bis(diphenyl)phosphate of bisphenol-A, respectively, their oligomeric and polymeric counterparts, and the like.

In a further embodiment, organic phosphates and organic compounds containing phosphorous-nitrogen bonds can also be present. For example, phosphonitrilic chloride, phosphorous ester amides, phosphoric acid amides, phosphonic acid amides, phosphinic acid amides, tris(aziridinyl)phosphine oxide, or the like. In one embodiment, [phenoxyphosphazene] is used as a flame retardant.

Exemplary flame retardants include aromatic cyclic phosphazenes having a structure represented by the formula:

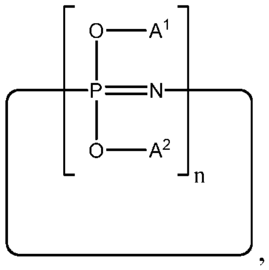

wherein each of $A^1$ and $A^2$ is independently an aryl group having 6 to 10 carbon atoms substituted with 0 to 4 $C_1$-$C_4$ alkyl groups; and n is an integer of 3 to 6. The aryl group of $A^1$ and $A^2$ means an aromatic hydrocarbon group having 6 to 10 atoms. Examples of such groups include phenyl and naphthyl groups. In a further embodiment, the aryl group of $A^1$ and $A^2$ is independently selected from phenyl and naphthyl. In a still further embodiment, the aryl group of $A^1$ and $A^2$ is phenyl. In a further embodiment, aromatic cyclic phosphazene compound is a mixture of compounds represented by the foregoing formula, comprising a mixture of compounds with n=3, n=4, n=5, and n=6.

The "aryl group having 6 to 10 carbon atoms" can be substituted with 0 to 4 $C_1$-$C_4$ alkyl groups, wherein the alkyl group means a straight or branched saturated hydrocarbon group having 1 to 4 carbon atoms. Examples of the group include a methyl group, an ethyl group, a propyl group, an isopropyl group, a butyl group, an isobutyl group, a sec-butyl group, and a tert-butyl group. In various further embodiments, the alkyl group has 1 to 3 carbon atoms. In a still further embodiment, the alkyl group is methyl.

In a further embodiment, each of $A^1$ and $A^2$ is a phenyl group, wherein each of $A^1$ and $A^2$ is independently substituted with 0 to 4 $C_1$-$C_4$ alkyl groups. In a still further embodiment, each of $A^1$ and $A^2$ is a phenyl group, wherein each of $A^1$ and $A^2$ is independently substituted with 0 to 4 $C_1$-$C_3$ alkyl groups. In a yet further embodiment, each of $A^1$ and $A^2$ is a phenyl group independently substituted with 0 to 4 methyl groups. In an even further embodiment, each of $A^1$ and $A^2$ is independently selected from phenyl, o-tolyl, p-tolyl, and m-tolyl.

In various further embodiments, three to six $A^1$ groups are present, wherein each $A^1$ group can be the same as or different from each other. In a further embodiment, three to six $A^1$ groups are present, wherein each $A^1$ group is the same.

In various further embodiments, three to six $A^2$ groups are present, wherein each $A^2$ group can be the same as or different from each other. In a further embodiment, three to six $A^2$ groups are present, wherein each $A^2$ group is the same. In a yet further embodiment, each $A^1$ and each $A^2$ are the same moiety.

In a further embodiment, aromatic cyclic phosphazenes useful in the present invention are compounds having a structure represented by the formula:

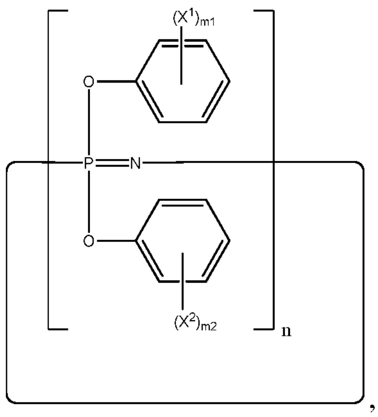

wherein each occurrence of $X^1$ and $X^2$ is independently a $C_1$-$C_4$ alkyl group; wherein each of m1 and m2 is independently an integer of 0 to 4; and wherein n is an integer of 3 to 6. As described above, alkyl group means a straight or branched saturated hydrocarbon group having 1 to 4 carbon atoms. Examples of the group include a methyl group, an ethyl group, a propyl group, an isopropyl group, a butyl group, an isobutyl group, a sec-butyl group, and a tert-butyl group. In various further embodiments, the alkyl group has 1 to 3 carbon atoms. In a still further embodiment, the alkyl group is methyl. In a further embodiment, each of m1 and m2 is independently an integer of 0 to 3. In a still further embodiment, each of m1 and m2 is independently an integer of 0 to 2. In a yet further embodiment, each of m1 and m2 is independently an integer that is 0 or 1. In an even further embodiment, each of m1 and m2 is 0. In a still further embodiment, each of m1

and m2 is 1.

In various further embodiments, three to six $X^1$ groups are present, wherein each $X^1$ group can be the same as or different from each other. In a further embodiment, three to six $X^1$ groups are present, wherein each $X^1$ group is the same.

In various further embodiments, three to six $X^2$ groups are present, wherein each $X^2$ group can be the same as or different from each other. In a further embodiment, three to six $X^2$ groups are present, wherein each $X^2$ group is the same. In a yet further embodiment, each $X^1$ and each $X^2$ are the same moiety.

In various further embodiments, the aromatic cyclic phosphazene is a compound selected from Examples of the compound represented by General Formula (I) include 2,2,4,4,6,6-hexaphenoxycyclotriphosphazene, 2,2,4,4,6,6-hexakis(p-tolyloxy)cyclotriphosphazene, 2,2,4,4,6,6-hexakis(m-tolyloxy)-cyclotriphosphazene, 2,2,4,4,6,-hexakis(o-tolyloxy)cyclotriphosphazene, 2,4,6-triphenoxy-2,4,6-tris(p-tolyloxy)cyclotriphosphazene, 2,4,6-triphenoxy-2,4,6-tris(m-tolyloxy)-cyclotriphosphazene, 2,4,6-triphenoxy-2,4,6-tris(o-tolyloxy)cyclotriphosphazene, 2,4,6-triphenoxy-2,4,6-tris(2-ethylphenoxy)cyclotriphosphazene, 2,4,6-triphenoxy-2,4,6-tris(3-ethylphenoxy)cyclotriphosphazene, 2,4,6-triphenoxy-2,4,6-tris(4-ethylphenoxy)-cyclotriphosphazene, 2,4,6-triphenoxy-2,4,6-tris(2,3-xylyloxy)cyclotriphosphazene, 2,4,6-triphenoxy-2,4,6-tris(2,4-xylyloxy)cyclotriphosphazene, 2,4,6-triphenoxy-2,4,6-tris(2,5-xylyloxy)cyclotriphosphazene, 2,4,6-triphenoxy-2,4,6-tris(2,6-xylyloxy)cyclotriphosphazene, 2,4,6-triphenoxy-2,4,6-tris(3,4-xylyloxy)cyclotriphosphazene, 2,4,6-triphenoxy-2,4,6-tris(3,5-xylyloxy)cyclotriphosphazene, 2,2,4,4,6,6,8,8-octaphenoxycyclotetraphosphazene, 2,2,4,4,6,6,8,8-octakis(p-tolyloxy)cyclotetraphosphazene, 2,2,4,4,6,6,8,8-octakis(m-tolyloxy)cyclotetraphosphazene, 2,2,4,4,6,6,8,8-octakis(o-tolyloxy)cyclotetraphosphazene, 2,4,6,8-tetraphenoxy-2,4,6,8-tetrakis(p-tolyloxy)cyclotetraphosphazene, 2,4,6,8-tetraphenoxy-2,4,6,8-tetrakis(m-tolyloxy)cyclotetraphosphazene, and 2,4,6,8-tetraphenoxy-2,4,6,8-tetrakis(o-tolyloxy)cyclotetraphosphazene. In a still further embodiment, the aromatic cyclic phosphazene is selected from 2,2,4,4,6,6-hexaphenoxycyclotriphosphazene, 2,4,6-triphenoxy-2,4,6-tris(p-tolyloxy)cyclotriphosphazene, 2,4,6-triphenoxy-2,4,6-tris(m-tolyloxy)cyclotriphosphazene, and 2,4,6-triphenoxy-2,4,6-tris(o-tolyloxy)cyclotriphosphazene.

In a further embodiment, the aromatic cyclic phosphazene at least one compound represented by one of the phosphazene formulas described herein as a main component. In various embodiments, the content of the aromatic cyclic phosphazene composition is about 90 wt%. In a further embodiment, the content of the aromatic cyclic phosphazene composition is about 95 wt%. In a still further embodiment, the content of the aromatic cyclic phosphazene composition is about 100 wt%.

Other components in the aromatic cyclic phosphazene composition are not specifically limited as long as the object of the present invention is not impaired.

Aromatic cyclic phosphazene-containing flame retardant useful in the present invention are commerically available. Suitable examples of such commercial products include "Rabitle FP-110" and "Rabitle FP-390" manufactured by FUSHIMI Pharmaceutical Co., Ltd.In a further embodiment, the phosphorus-containing flame retardant is selected from a phosphine, a phosphine oxide, a bisphosphine, a phosphonium salt, a phosphinic acid salt, a phosphoric ester, and a phosphorous ester.

In a further embodiment, the flame retardant is selected from rescorcinol bis(diphenyl phosphate), resorcinol bis(dixylenyl phosphate), hydroquinone bis(diphenyl phosphate), bisphenol-A bis(diphenyl phosphate), 4,4'-biphenol bis(diphenyl phosphate), triphenyl phosphate, methylneopentyl phosphite, pentaerythritol diethyl diphosphite, methyl neopentyl phosphonate, phenyl neopentyl phosphate, pentaerythritol diphenyldiphosphate, dicyclopentyl hypodiphosphate, dineopentyl hypophosphite, phenylpyrocatechol phosphite, ethylpyrocatechol phosphate and dipyrocatechol hypodiphosphate. In a still further embodiment, the flame retardant is selected from triphenyl phosphate; cresyldiphenylphosphate; tri(isopropylphenyl)phosphate; resorcinol bis(diphenylphosphate); and bisphenol-A bis(diphenyl phosphate). In a yet further embodiment, the flame retardant is selected from resorcinol bis(biphenyl phosphate), bisphenol A bis(diphenyl phosphate) hydroquinone bis(diphenyl phosphate), phosphoric acid, 1,3-phenylene tetraphenyl ester), bisphenol-A bis-diphenyl phosphate) or mixtures thereof. In a still further embodiment, the flame retardant is selected from resorcinol bis(biphenyl phosphate), bisphenol A bis(diphenyl phosphate), and hydroquinone bis(diphenyl phosphate), or mixtures thereof. In yet a further embodiment, the flame retardant is bisphenol A bis(diphenyl phosphate). In an even further embodiment, the phosphorus-containing flame retardant is resorcinol bis(biphenyl phosphate).

In various embodiments, the flame retardant is present in an amount less than or equal to about 25 wt%. In a further embodiment, the flame retardant is present in an amount less than or equal to about 20 wt%. In a still further embodiment, the flame retardant is present in an amount less than or equal to about 15 wt%. In a yet further embodiment, the flame retardant is present in an amount less than or equal to about 10 wt%.

In a further embodiment, the flame retardant is present in an amount from about 10 wt% to about 25 wt%. In a still further embodiment, the flame retardant is present in an amount from about 10 wt% to about 20 wt%. In yet a further embodiment, the flame retardant is present in an amount from about 10 wt% to about 15 wt%.

In a further embodiment, the flame retardant is present in an amount from about 5 wt% to about 25 wt%. In a still further embodiment, the flame retardant is present in an amount from about 5 wt% to about 20 wt%. In yet a further

embodiment, the flame retardant is present in an amount from about 5 wt% to about 15 wt%. In an even further embodiment, the flame retardant is present in an amount from about 5 wt% to about 14 wt%. In a still further embodiment, the flame retardant is present in an amount from about 5 wt% to about 13 wt%. In yet a further embodiment, the flame retardant is present in an amount from about 5 wt% to about 12 wt%. In an even further embodiment, the flame retardant is present in an amount from about 5 wt% to about 11 wt%. In a still further embodiment, the flame retardant is present in an amount from about 5 wt% to about 10 wt%.

In a further embodiment, the flame retardant is present in an amount from about 3 wt% to about 25 wt%. In a still further embodiment, the flame retardant is present in an amount from about 3 wt% to about 20 wt%. In yet a further embodiment, the flame retardant is present in an amount from about 3 wt% to about 15 wt%. In an even further embodiment, the flame retardant is present in an amount from about 3 wt% to about 14 wt%. In a still further embodiment, the flame retardant is present in an amount from about 3 wt% to about 13 wt%. In yet a further embodiment, the flame retardant is present in an amount from about 3 wt% to about 12 wt%. In an even further embodiment, the flame retardant is present in an amount from about 3 wt% to about 11 wt%. In a still further embodiment, the flame retardant is present in an amount from about 3 wt% to about 10 wt%.

The disclosed polymer compositions can further comprise at least one additive conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composite mixture. In one embodiment, the disclosed compositions can comprise one or more additives selected from an anti-drip agent, antioxidant, antistatic agent, chain extender, colorant, de-molding agent, dye, flow promoter, flow modifier, light stabilizer, lubricant, mold release agent, pigment, quenching agent, thermal stabilizer, ultraviolet ("UV") absorbent substance, UV reflectant substance, and UV stabilizer, or combinations thereof. In one embodiment, the composition further comprises one or more optional additives selected from an antioxidant and stabilizer.

Exemplary anti-drip agents include, for example, a fibril forming or non-fibril forming fluoropolymer such as polytetrafluoroethylene ("PTFE"). In a further embodiment, the anti-drip agent is a styrene-acrylonitrile copolymer encapsulated polytetrafluoroethylene.

In a further embodiment, the anti-drip agent is present in an amount from about 0.05 wt% to about 3 wt%. In a still further embodiment, the anti-drip agent is present in an amount from about 0.1 wt% to about 2 wt%. In yet a further embodiment, the anti-drip agent is present in an amount from about 0.1 wt% to about 1 wt%.

Exemplary flow promoters include, for example, polyamide flow promoters such as nylon and polyphthalimide.

In a further embodiment, the flow promoter is present in an amount from about 0 wt% to about 5 wt%. In a still further embodiment, the flow promoter is present in an amount from about 0 wt% to about 4 wt%. In yet a further embodiment, the flow promoter is present in an amount from about 0 wt% to about 3 wt%.

In various embodiments, the invention further comprises one or more de-molding agents. In a further embodiment, the de-molding agent is present in an amount from about 0 wt% to about 5 wt%. In a still further embodiment, the de-molding agent is present in an amount from about 0 wt% to about 4 wt%. In yet a further embodiment, the de-molding agent is present in an amount from about 0 wt% to about 3 wt%.

Exemplary heat stabilizers include, for example, organophosphites such as triphenylphosphite, tris-(2,6-dimethylphenyl)phosphite, tris-(mixed mono-and dinonylphenyl)phosphite or the like; phosphonates such as dimethylbenzenephosphonate or the like, phosphates such as trimethyl phosphate, or the like, or combinations including at least one of the foregoing heat stabilizers. Heat stabilizers are generally used in amounts of from 0.01 to 0.5 parts by weight based on 100 parts by weight of the total composition, excluding any filler.

In a further embodiment, the heat stabilizer is present in an amount from about 0 wt% to about 5 wt%. In a still further embodiment, the heat stabilizer is present in an amount from about 0 wt% to about 4 wt%. In yet a further embodiment, the heat stabilizer is present in an amount from about 0 wt% to about 3 wt%.

In various embodiments, the invention further comprises an antioxidant. Exemplary antioxidants include, for example, organophosphites such as tris(nonyl phenyl)phosphite, tris(2,4-di-t-butylphenyl)phosphite, bis(2,4-di-t-butylphenyl)pentaerythritoldiphosphite, distearylpentaerythritoldiphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylatedthiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants are generally used in amounts of from 0.01 to 0.5 parts by weight, based on 100 parts by weight of the total composition, excluding any filler.

In a further embodiment, the antioxidant is a primary antioxidant, a secondary antioxidant, or combinations thereof.

In a further embodiment, the primary antioxidant is selected from a hindered phenol and secondary aryl amine, or a combination thereof. In a still further embodiment, the hindered phenol comprises one or more compounds selected from triethylene glycol bis[3-(3-t-butyl-5-methyl-4-hydroxyphenyl)propionate], 1,6-hexanediol bis[3-(3,5-di-t-butyl-4-hydroxyphenyl)propionate], 2,4-bis(n-octylthio)-6-(4-hydroxy-3,5-di-t-butylanilino)-1,3,5-triazine, pentaerythrityl tetrakis[3-(3,5-di-t-butyl-4-hydroxyphenyl)-propionate], 2,2-thiodiethylene bis[3-(3,5-di-t-butyl-4-hydroxyphenyl)propionate], octadecyl 3-(3,5-di-t-butyl-4-hydroxyphenyl)propionate, N,N'-hexamethylene bis(3,5-di-t-butyl-4-hydroxyhydrocinnamamide), tetrakis(methylene 3,5-di-tert-butyl-hydroxycinnamate)methane, and octadecyl 3,5-di-tert-butylhydroxyhydrocinnamate. In yet a further embodiment, the hindered phenol comprises octadecyl-3-(3,5-di-t-butyl-4-hydroxyphenyl)-propionate.

In a further embodiment, the primary anti-oxidant is present in an amount from about 0.01 wt% to about 0.50 wt%. In a still further embodiment, the primary anti-oxidant is present in an amount from about 0.01 wt% to about 0.20 wt%. In yet a further embodiment, the primary anti-oxidant is present in an amount from about 0.01 wt% to about 0.10 wt%.

In a further embodiment, the secondary anti-oxidant is selected from an organophosphate and thioester, or a combination thereof. In a still further embodiment, the secondary anti-oxidant comprises one or more compounds selected from tetrakis(2,4-di-tert-butylphenyl) [1,1-biphenyl]-4,4'-diylbisphosphonite, tris(2,4-di-tert-butylphenyl) phosphite, bis(2,4-di-tert-butylphenyl) pentaerythritol diphosphite, bis(2,4-dicumylphenyl)pentaerytritoldiphosphite, tris(nonyl phenyl)phosphite, and distearyl pentaerythritol diphosphite. In a still further embodiment, the secondary anti-oxidant comprises tris(2,4-di-tert-butylphenyl) phosphite.

In a further embodiment, the secondary anti-oxidant is present in an amount from about 0.01 wt% to about 0.50 wt%. In a still further embodiment, the secondary anti-oxidant is present in an amount from about 0.01 wt% to about 0.20 wt%. In yet a further embodiment, the secondary anti-oxidant is present in an amount from about 0.01 wt% to about 0.10 wt%.

Exemplary light stabilizers include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers are generally used in amounts of from 0.1 to 1.0 parts by weight (pbw), based on 100 parts by weight of the total composition, excluding any filler.

In a further embodiment, the light stabilizer is present in an amount from about 0 wt% to about 5 wt%. In a still further embodiment, the light stabilizer is present in an amount from about 0 wt% to about 4 wt%. In yet a further embodiment, the light stabilizer is present in an amount from about 0 wt% to about 3 wt%.

In various embodiments, the invention further comprises a mold release agent. Exemplary mold releasing agents include for example, metal stearate, stearyl stearate, pentaerythritoltetrastearate, beeswax, montan wax, paraffin wax, or the like, or combinations including at least one of the foregoing mold release agents. In a further embodiment, the mold release agent is an alkyl carboxylic acid ester. In a still further embodiment, the alkyl carboxylic acid ester is selected from pentaerythritol tetrastearate, glycerin tristearate and ethylene glycol distearate. In yet a further embodiment, the alkyl carboxylic acid ester is pentaerythritol tetrastearate.

Mold releasing agents are generally used in amounts of from 0.1 to 1.0 parts by weight, based on 100 parts by weight of the total composition, excluding any filler. In a further embodiment, the mold release agent is present in an amount from about 0.05 wt% to about 1.0 wt%. In a still further embodiment, the mold release agent is present in an amount from about 0.05 wt% to about 0.75 wt%. In yet a further embodiment, the mold release agent is present in an amount from about 0.05 wt% to about 0.50 wt%. In an even further embodiment, the mold release agent is present in an amount from about 0.05 wt% to about 0.30 wt%.

Exemplary plasticizers include, for example, phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from 0.5 to 3.0 parts by weight, based on 100 parts by weight of the total composition, excluding any filler.

Exemplary antistatic agents include, for example, glycerol monostearate, sodium stearylsulfonate, sodium dodecylbenzenesulfonate or the like, or combinations of the foregoing antistatic agents. In one embodiment, carbon fibers, carbon nanofibers, carbon nanotubes, carbon black, or any combination of the foregoing can be used in a polymeric resin containing chemical antistatic agents to render the composition electrostatically dissipative.

Exemplary UV absorbers include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium

oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

In a further embodiment, the UV absorber is present in an amount from about 0 wt% to about 5 wt%. In a still further embodiment, the UV absorber is present in an amount from about 0 wt% to about 4 wt%. In yet a further embodiment, the UV absorber is present in an amount from about 0 wt% to about 3 wt%.

In various embodiments, the invention further comprises one or more UV stabilizers. In a further embodiment, the UV stabilizer is present in an amount from about 0 wt% to about 5 wt%. In a still further embodiment, the UV stabilizer is present in an amount from about 0 wt% to about 4 wt%. In yet a further embodiment, the UV stabilizer is present in an amount from about 0 wt% to about 3 wt%.

Exemplary lubricants include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants are generally used in amounts of from 0.1 to 5 parts by weight, based on 100 parts by weight of the total composition, excluding any filler.

Exemplary blowing agents include for example, low boiling halohydrocarbons and those that generate carbon dioxide; blowing agents that are solid at room temperature and when heated to temperatures higher than their decomposition temperature, generate gases such as nitrogen, carbon dioxide, ammonia gas, such as azodicarbonamide, metal salts of azodicarbonamide, 4,4' oxybis(benzenesulfonylhydrazide), sodium bicarbonate, ammonium carbonate, or the like, or combinations including at least one of the foregoing blowing agents. Blowing agents are generally used in amounts of from 1 to 20 parts by weight, based on 100 parts by weight of the total composition, excluding any filler.

Exemplary pigments include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violent 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments.

In a further embodiment, the pigment is present in an amount from about 0 wt% to about 5 wt%. In a still further embodiment, the pigment is present in an amount from about 0 wt% to about 4 wt%. In yet a further embodiment, the pigment is present in an amount from about 0 wt% to about 3 wt%.

Additionally, materials to improve flow and other properties can be added to the composition, such as low molecular weight hydrocarbon resins. Particularly useful classes of low molecular weight hydrocarbon resins are those derived from petroleum $C_5$ to $C_9$ feedstock that are derived from unsaturated $C_5$ to $C_9$ monomers obtained from petroleum cracking. Non-limiting examples include olefins, e.g., pentenes, hexenes, heptenes and the like; diolefins, e.g., pentadienes, hexadienes and the like; cyclic olefins and diolefins, e.g., cyclopentene, cyclopentadiene, cyclohexene, cyclohexadiene, methyl cyclopentadiene and the like; cyclic diolefindienes, e.g., dicyclopentadiene, methylcyclopentadiene dimer and the like; and aromatic hydrocarbons, e.g., vinyltoluenes, indenes, methylindenes and the like. The resins can additionally be partially or fully hydrogenated.

The compositions of the present invention can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230°C and about 350°C in the molten resin composition, although higher temperatures can be used provided that the residence time of the resin in the processing equipment is kept short. In some embodiments the melt processed composition exits processing equipment such as an extruder through small exit holes in a die. The resulting strands of molten resin are cooled by passing the strands through a water bath. The cooled strands can be chopped into small pellets for packaging and further handling.

Compositions can be manufactured by various methods. For example, polymer , and/or other optional components are first blended, optionally with fillers in a HENSCHEL-Mixer™ high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding directly into the extruder at the throat and/or downstream through a side stuffer. Additives can also be

compounded into a masterbatch with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate can be one-fourth inch long or less as desired. Such pellets can be used for subsequent molding, shaping, or forming.

In a further embodiment, during the injection molding step, the optional phosphorus-containing flame retardant and thermally conductive filler can be mixed with the thermoplastic polymer. In another embodiment, the blend composition further comprises one or more optional additives selected from a primary antioxidant, secondary anti-oxidant, additional fillers, and stabilizer. In a still further embodiment, single shot injection molding can be used to produce the parts or articles to be laser structured. In another embodiment, additional ingredients can be added to the polymer composition after this step.

In one embodiment, the invention relates to methods of improving mechanical performance properties of a blended thermoplastic composition, the method comprising the step of combining: (a) from 20 wt% to 80 wt% of a first polycarbonate polymer component; (b) from 1 wt% to 30 wt% of at least one polycarbonate-polysiloxane copolymer component; (c) from 1 wt% to 30 wt% of a second polycarbonate polymer component, wherein the second polycarbonate polymer component is a branched chain polycarbonate polymer; and (d) from greater than 0 wt% to 50 wt% of a thermally conductive filler component; wherein the combined weight percent value of all components does not exceed 100 wt%; wherein a molded sample of the blended thermoplastic composition has a through-plane thermal conductivity when determined in accordance with ASTM E1461 of greater than or equal to 0.4 W/mK; and wherein a molded sample of the blended thermoplastic composition has an in-plane thermal conductivity when determined in accordance with ASTM E1461 of greater than or equal to 1.0 W/mK.

In a further embodiment, the invention relates to the method of preparing a blended thermoplastic composition as described herein above, wherein mixing comprises the steps of (a) dry blending from 20 wt% to 80 wt% of the first polycarbonate polymer component with from 1 wt% to 30 wt% of at least one polycarbonate-polysiloxane copolymer component and from 1 wt% to 30 wt% of a second polycarbonate polymer component, wherein the second polycarbonate polymer component is a branched chain polycarbonate polymer to provide a polycarbonate dry blended mixture; (b) feeding the polycarbonate dry blended mixture into an extruder apparatus; and (c) compounding in the extruder apparatus the polycarbonate dry blended mixture with from greater than 0% wt% to 50% wt% of a thermally conductive filler component.

In a further embodiment, the invention relates to the method of preparing a blended thermoplastic composition as described herein above, wherein mixing further comprises feeding into the extruder apparatus in a downstream extruder zone from about 25 wt% to about 60 wt% of a reinforcing filler.

In a further embodiment, the invention relates to methods of preparing a blended thermoplastic composition, comprising the steps: (a) dry blending the following to form a polycarbonate dry blended mixture: (i) from 20 wt% to 80 wt% of a first polycarbonate polymer component; (ii) from 1 wt% to 30 wt% of a second polycarbonate polymer component, wherein the second polycarbonate polymer component is a branched chain polycarbonate polymer; and (iii) from 1 wt% to 30 wt% of at least one polycarbonate -polysiloxane copolymer component; (b) feeding the polycarbonate dry blended mixture into an extruder apparatus; and (c) feeding into the extruder apparatus in a downstream extruder zone from greater than 0 wt% to 50 wt% of a thermally conductive filler component; wherein the combined weight percent value of all components does not exceed 100 wt%; wherein all weight percent values are based on the total weight of the composition; wherein a molded sample of the blended thermoplastic composition has a through-plane thermal conductivity when determined in accordance with ASTM E1461 of greater than or equal to 0.4 W/mK; and wherein a molded sample of the blended thermoplastic composition has an in-plane thermal conductivity when determined in accordance with ASTM E1461 of greater than or equal to 1.0 W/mK.

In various embodiments, the invention relates to the method of preparing a blended thermoplastic composition as described herein above, the method further comprising feeding into the extruder apparatus in a downstream extruder zone from greater than 0 wt% to about 50 wt% of a reinforcing component. In a further embodiment, the reinforcing component is selected from glass beads, glass fiber, glass flakes, mica, talc, clay, wollastonite, zinc sulfide, zinc oxide, carbon fiber, ceramic-coated graphite, and titanium dioxide.

In various embodiments, the invention relates to the method of preparing a blended thermoplastic composition as described herein above, the method further comprising feeding into the extruder apparatus in a downstream extruder zone from greater than 0 wt% to about 20 wt% of a flame retardant. In a further embodiment, the flame retardant is a phosphorus-containing flame retardant. In a still further embodiment, the phosphorus-containing flame retardant is selected from a phosphine, a phosphine oxide, a bisphosphine, a phosphonium salt, a phosphinic acid salt, a phosphoric ester, a phosphorous ester, and an aromatic cyclic phosphazene compound, or combinations thereof. In a yet further embodiment, the flame retardant is selected from rescorcinol bis(diphenyl phosphate), resorcinol bis(dixylenyl phosphate), hydroquinone bis(diphenyl phosphate), bisphenol-A bis(diphenyl phosphate), 4,4'-biphenol bis(diphenyl phosphate), triphenyl phosphate, methylneopentyl phosphite, pentaerythritol diethyl diphosphite, methyl neopentyl phosphonate, phenyl neopentyl phosphate, pentaerythritol diphenyldiphosphate, dicyclopentyl hypodiphosphate, dineopentyl

hypophosphite, phenylpyrocatechol phosphite, ethylpyrocatechol phosphate, dipyrocatechol hypodiphosphate, and an aromatic cyclic phosphazene compound, or combinations thereof.

In various embodiments, the invention relates to the method of preparing a blended thermoplastic composition as described herein above, the method further comprising feeding into the extruder apparatus in a downstream extruder zone from greater than 0 wt% to about 5 wt% of at least one additive. In a further embodiment, the additive is selected from an anti-drip agent, antioxidant, antistatic agent, chain extender, colorant, de-molding agent, dye, flow promoter, flow modifier, light stabilizer, lubricant, mold release agent, pigment, quenching agent, thermal stabilizer, UV absorbent substance, UV reflectant substance, and UV stabilizer, or combinations thereof.

In one embodiment, the present invention pertains to shaped, formed, or molded articles comprising the blended thermoplastic compositions. The blended thermoplastic compositions can be molded into useful shaped articles by a variety of means such as injection molding, extrusion, rotational molding, blow molding and thermoforming to form articles such as, for example, cellular devices, smart phones, Wi-Fi devices, personal computers, notebook and portable computers, cell phone antennas and other such communications equipment, medical applications, radio frequency identification ("RFID") applications, automotive applications, and the like. In a further embodiment, the article is molded. In a still further embodiment, the article is extrusion molded. In yet a further embodiment, the article is injection molded.

In various embodiments, the polymer composition can be used in the field of electronics. In a further embodiment, non-limiting examples of fields which can use the disclosed blended thermoplastic polymer compositions include electrical, electro-mechanical, radio frequency ("RF") technology, telecommunication, automotive, aviation, medical, sensor, military, and security. In a still further embodiment, the use of the disclosed blended thermoplastic polymer compositions can also be present in overlapping fields, for example in mechatronic systems that integrate mechanical and electrical properties which may, for example, be used in automotive or medical engineering.

In a further embodiment, the article is selected from a computer device, electromagnetic interference device, printed circuit, Wi-Fi device, Bluetooth device, GPS device, cellular antenna device, smart phone device, automotive device, medical device, sensor device, security device, shielding device, RF antenna device, LED device, and RFID device. In a still further embodiment, the article is selected from a computer device, electromagnetic interference device, automotive device, medical device, sensor device, security device, shielding device, RF antenna device, LED device and RFID device. In yet a further embodiment, the article is selected from a computer device, sensor device, security device, RF antenna device, LED device and RFID device. In a still further embodiment, the article is selected from a computer device, LED device and RFID device. In yet a further embodiment, the article is a LED device. In an even further embodiment, the LED device is a LED lamp.

In a further embodiment, the article is selected from a RF antenna device, cellular antenna device, smart phone device, and electromagnetic interference device. In a still further embodiment, the article is an external cover or frame for a RF antenna device, cellular antenna device, smart phone device, or electromagnetic interference device. In yet a further embodiment, the article is a central frame for a RF antenna device, cellular antenna device, smart phone device, or electromagnetic interference device. In an even further embodiment, the article is a RF antenna device cover. In a still further embodiment, the article is a RF antenna device external frame. In yet a further embodiment, the article is a RF antenna device central frame.

In a further embodiment, the article is a cellular antenna device cover. In a still further embodiment, the article is a cellular antenna device external frame. In yet a further embodiment, the article is a cellular antenna device central frame.

In a further embodiment, the article is a smart phone device cover. In a still further embodiment, the article is a smart phone device external frame. In yet a further embodiment, the article is a smart phone device central frame.

In various embodiments, molded articles according to the present invention can be used to produce a device in one or more of the foregoing fields. In a still further embodiment, non-limiting examples of such devices in these fields which can use the disclosed blended thermoplastic polymer compositions according to the present invention include computer devices, household appliances, decoration devices, electromagnetic interference devices, printed circuits, Wi-Fi devices, Bluetooth devices, global positioning system ("GPS") devices, cellular antenna devices, smart phone devices, automotive devices, military devices, aerospace devices, medical devices, such as hearing aids, sensor devices, security devices, shielding devices, RF antenna devices, or RFID devices.

In a further embodiment, the molded articles can be used to manufacture devices in the automotive field. In a still further embodiment, non-limiting examples of such devices in the automotive field which can use the disclosed blended thermoplastic compositions in the vehicle's interior include adaptive cruise control, headlight sensors, windshield wiper sensors, and door/window switches. In a further embodiment, non-limiting examples of devices in the automotive field which can the disclosed blended thermoplastic compositions in the vehicle's exterior include pressure and flow sensors for engine management, air conditioning, crash detection, and exterior lighting fixtures.

In a further embodiment, the resulting disclosed compositions can be used to provide any desired shaped, formed, or molded articles. For example, the disclosed compositions can be molded into useful shaped articles by a variety of means such as injection molding, extrusion, rotational molding, blow molding and thermoforming. As noted

above, the disclosed compositions are particularly well suited for use in the manufacture of electronic components and devices. As such, according to some embodiments, the disclosed compositions can be used to form articles such as printed circuit board carriers, burn in test sockets, flex brackets for hard disk drives, and the like.

In various embodiments, the present invention pertains to and includes at least the following embodiments.

Embodiment 1. A blended thermoplastic composition comprising: (a) from 20 wt% to 80 wt% of a first polycarbonate polymer component; (b) from 1 wt% to 30 wt%, preferably 5 wt% to 25 wt%, or preferably 10 wt% to 20 wt%, of a second polycarbonate polymer component, wherein the second polycarbonate polymer component is a branched chain polycarbonate polymer; (c) from 1 wt% to 30 wt% of at least one polycarbonate -polysiloxane copolymer component; and (d) from greater than 0 wt% to 50 wt% of a thermally conductive filler component; wherein the combined weight percent value of all components does not exceed about 100 wt%; wherein all weight percent values are based on the total weight of the composition; wherein a molded sample of the blended thermoplastic composition has a through-plane thermal conductivity when determined in accordance with ASTM E1461 of greater than or equal to 0.4 W/mK; and wherein a molded sample of the blended thermoplastic composition has an in-plane thermal conductivity when determined in accordance with ASTM E1461 of greater than or equal to 1.0 W/mK.

Embodiment 2. The composition of Embodiment 1, wherein the first polycarbonate polymer component is a homopolymer.

Embodiment 3. The composition of Embodiment 2, wherein the homopolymer comprises repeating units derived from bisphenol A.

Embodiment 4. The composition of Embodiment 1, wherein the first polycarbonate polymer component is a copolymer.

Embodiment 5. The composition of Embodiment 4, wherein the copolymer comprises repeating units derived from BPA.

Embodiment 6. The composition of Embodiment 4, wherein the copolymer comprises repeating units derived from sebacic acid.

Embodiment 7. The composition of Embodiment 4, wherein the copolymer comprises repeating units derived from sebacic acid and BPA.

Embodiment 8. The composition of any of Embodiments 1-7, wherein the first polycarbonate polymer component has a weight average molecular weight from about 15,000 to about 75,000 grams/mole, as measured by gel permeation chromatography using BPA polycarbonate standards.

Embodiment 9. The composition of any of Embodiments 1-8, wherein the first polycarbonate polymer component is blend comprising at least two polycarbonate polymers.

Embodiment 10. The composition of any of Embodiments 1-9, wherein the first polycarbonate polymer component is present in an amount from about 35 wt% to about 70 wt%.

Embodiment 11. The composition of any of Embodiments 1-10, wherein the first polycarbonate polymer component is present in an amount from about 35 wt% to about 60 wt%.

Embodiment 12. The composition of any of Embodiments 1-11, wherein the first polycarbonate polymer component is present in an amount from about 45 wt% to about 70 wt%.

Embodiment 13. The composition of any of Embodiment 1-Embodiment 9, wherein the first polycarbonate polymer component is present in an amount from about 45 wt% to about 60 wt%.

Embodiment 14. The composition of any of Embodiments 1-13, wherein the first polycarbonate polymer component is present in an amount from about 60 wt% to about 70 wt%.

Embodiment 15. The composition of any of Embodiments 1-14, wherein the second polycarbonate polymer component comprises residues derived from tris-(hydroxyphenyl)ethane.

Embodiment 16. The composition of any of Embodiments 1-15, wherein the second polycarbonate polymer component is end-capped.

Embodiment 17. The composition of any of Embodiments 1-16, wherein the second polycarbonate polymer component is end-capped with p-hydroxybenzonitrile.

Embodiment 18. The composition of any of Embodiments 1-17, wherein the second polycarbonate polymer component comprises residues derived from BPA.

Embodiment 19. The composition of any of Embodiments 1-18, wherein the second polycarbonate polymer component is present in an amount from about 5 wt% to about 25 wt%.

Embodiment 20. The composition of any of Embodiments 1-19, wherein the second polycarbonate polymer component is present in an amount from about 5 wt% to about 30 wt%.

Embodiment 21. The composition of any of Embodiments 1-20, wherein the second polycarbonate polymer component is present in an amount from about 10 wt% to about 15 wt%.

Embodiment 22. The composition of any of Embodiments 1-21, wherein the second polycarbonate polymer component is present in an amount from about 10 wt% to about 20 wt%.

Embodiment 23. The composition of any of Embodiments 1-22, wherein the second polycarbonate polymer

component is present in an amount from about 15 wt% to about 20 wt%.

Embodiment 24. The composition of any of Embodiments 1-23, wherein the polycarbonate-polysiloxane copolymer component is a polycarbonate-polysiloxane block copolymer.

Embodiment 25. The composition of Embodiment 24, wherein the polycarbonate block comprises residues derived from BPA.

Embodiment 26. The composition of Embodiments 24-25, wherein the polycarbonate block comprising residues derived from BPA is a homopolymer.

Embodiment 27. The composition of any of Embodiments 1-26, wherein the polycarbonate-polysiloxane copolymer component comprises dimethylsiloxane repeating units.

Embodiment 28. The composition of any of Embodiments 1-27, wherein the polycarbonate-polysiloxane copolymer component comprises a polysiloxane block from about 5 wt% to about 30 wt% of the polycarbonate-polysiloxane copolymer component.

Embodiment 29. The composition of any of Embodiment 1-27, wherein the polycarbonate-polysiloxane copolymer component comprises a polysiloxane block less than about 25 wt% of the polycarbonate-polysiloxane copolymer component.

Embodiment 30. The composition of any of Embodiments 1-28, wherein the polycarbonate-polysiloxane copolymer component comprises a polysiloxane block from about 15 wt% to about 25 wt% of the polycarbonate-polysiloxane copolymer component.

Embodiment 31. The composition of any of Embodiments 1-30, wherein the polycarbonate-polysiloxane copolymer component is present in an amount from about 5 wt% to about 25 wt%.

Embodiment 32. The composition of any of Embodiments 1-31, wherein the polycarbonate-polysiloxane copolymer component is present in an amount from about 5 wt% to about 20 wt%.

Embodiment 33. The composition of any of Embodiments 1-32, wherein the polycarbonate-polysiloxane copolymer component is present in an amount from about 10 wt% to about 20 wt%.

Embodiment 34. The composition of any of Embodiments 1-33, wherein the polycarbonate-polysiloxane copolymer component is present in an amount from about 10 wt% to about 15 wt%.

Embodiment 35. The composition of any of Embodiments 1-33, wherein the polycarbonate-polysiloxane copolymer component is present in an amount from about 15 wt% to about 20 wt%.

Embodiment 36. The composition of any of Embodiments 1-30, wherein the polycarbonate-polysiloxane copolymer component is present in an amount greater than 0 wt% to about 20 wt%.

Embodiment 37. The composition of any of Embodiments 1-36, wherein the polycarbonate-polysiloxane copolymer component comprises a blend of polycarbonate-polysiloxane copolymers.

Embodiment 38. The composition of any of Embodiments 1-37, further comprising a polyester polymer component.

Embodiment 39. The composition of Embodiment 38, wherein the polyester polymer is polybutylene terephthalate.

Embodiment 40. The composition of any of Embodiments 38-39, wherein the polyester polymer is polyethylene terephthalate.

Embodiment 41. The composition of any of Embodiment 38-40, wherein the polyester polymer component is present in an amount from greater than 0 wt% to about 20 wt%.

Embodiment 42. The composition of any of Embodiments 38-41, wherein the polyester polymer component is present in an amount from greater than 0 wt% to about 10 wt%.

Embodiment 43. The composition of any of Embodiments 38-42, wherein the polyester polymer component is present in an amount from greater than about 1 wt% to about 10 wt%.

Embodiment 44. The composition of any of Embodiments 38-43, wherein the polyester polymer component is present in an amount from about 5 wt% to about 15 wt%.

Embodiment 45. The composition of any of Embodiments 1-44, further comprising an impact modifier polymer component.

Embodiment 46. The composition of Embodiment 45, wherein the impact modifier component comprises at least one acrylonitrile-butadiene-styrene (ABS) polymer, at least one bulk polymerized ABS (BABS) polymer, or at least one methyl methacrylate-butadiene-styrene (MBS) polymer.

Embodiment 47. The composition of any of Embodiments 45-46, wherein the impact modifier component comprises a methacrylate-butadiene-styrene (MBS) polymer.

Embodiment 48. The composition of any of Embodiments 45-46, wherein the impact modifier component comprises an acrylonitrile-butadiene-styrene (ABS) polymer composition.

Embodiment 49. The composition of Embodiment 48, wherein the ABS polymer composition is an emulsion polymerized ABS.

Embodiment 50. The composition of Embodiment 48, wherein the ABS polymer composition is a bulk-polymerized ABS.

Embodiment 51. The composition of Embodiment 48, wherein the ABS polymer composition is a SAN-grafted emulsion ABS.

Embodiment 52. The composition of any of Embodiments 45-51, wherein the impact modifier is present is an amount greater than 0 wt% to about 20 wt%.

Embodiment 53. The composition of any of Embodiment 45-52, wherein the impact modifier is present is an amount greater than 0 wt% to about 10 wt%.

Embodiment 54. The composition of any of Embodiments 45-53, wherein the impact modifier is present is an amount from about 1 wt% to about 10 wt%.

Embodiment 55. The composition of any of Embodiments 45-52, wherein the impact modifier is present is an amount from about 5 wt% to about 15 wt%.

Embodiment 56. The composition of any of Embodiments 1-55, wherein the thermally conductive filler is selected from AlN, $Al_4C_3$, $Al_2O_3$, BN, AlON, $MgSiN_2$, SiC, $Si_3N_4$, graphite, expanded graphite, graphene, carbon fiber, ZnS, CaO, MgO, ZnO, $TiO_2$, $H_2Mg_3(SiO_3)_4$, $CaCO_3$, $Mg(OH)_2$, mica, BaO, $\gamma$-AlO(OH), $\alpha$-AlO(OH), $Al(OH)_3$, $BaSO_4$, $CaSiO_3$ $ZrO_2$, $SiO_2$, a glass bead, a glass fiber, MgO•x$Al_2O_3$, $CaMg(CO_3)_2$, and a clay, or a combinations thereof.

Embodiment 57. The composition of any of Embodiments 1-55, wherein the thermally conductive filler component comprises at least one high thermally conductive filler.

Embodiment 58. The composition of Embodiment 57, wherein the high thermally conductive filler has a conductivity greater than or equal to about 30 W/mK when determined in accordance with ASTM E1225.

Embodiment 59. The composition of any of Embodiments 57-58, wherein the high thermally conductive filler is selected from AlN, $Al_4C_3$, $Al_2O_3$, BN, AlON, $MgSiN_2$, SiC, $Si_3N_4$, graphite, expanded graphite, graphene, and carbon fiber, or a combinations thereof.

Embodiment 60. The composition of any of Embodiments 57-59, wherein the high thermally conductive filler is selected from AlN, $Al_2O_3$, BN, SiC, graphite, expanded graphite, and carbon fiber, or combinations thereof.

Embodiment 61. The composition of any of Embodiments 57-60, wherein the high thermally conductive filler is selected from BN, graphite, and expanded graphite, or combinations thereof.

Embodiment 62. The composition of any of Embodiments 1-61, wherein the thermally conductive filler component comprises at least one intermediate thermally conductive filler.

Embodiment 63. The composition of Embodiment 62, wherein the intermediate thermally conductive filler component has a conductivity from about 10 W/mK to about 30 W/mK when determined in accordance with ASTM E1225.

Embodiment 64. The composition of any of Embodiments 62-63, wherein the intermediate thermally conductive filler is selected from ZnS, CaO, MgO, ZnO, and $TiO_2$, or combinations thereof.

Embodiment 65. The composition of any of Embodiments 62-64, wherein the intermediate thermally conductive filler is $TiO_2$.

Embodiment 66. The composition of any of Embodiments 1-61, wherein the thermally conductive filler component comprises at least one low thermally conductive filler.

Embodiment 67. The composition of Embodiment 66, wherein the low thermally conductive filler component has a conductivity less than about 10 W/mK when determined in accordance with ASTM E1225.

Embodiment 68. The composition of any of Embodiments 66-67, wherein the low thermally conductive filler is selected from $H_2Mg_3(SiO_3)_4$, $CaCO_3$, $Mg(OH)_2$, mica, BaO, $\gamma$-AlO(OH), $\alpha$-AlO(OH), $Al(OH)_3$, $BaSO_4$, $CaSiO_3$ $ZrO_2$, $SiO_2$, a glass bead, a glass fiber, MgO•xAl2O3, $CaMg(CO_3)_2$, a clay, or a combination thereof.

Embodiment 69. The composition of any of Embodiments 66-68, wherein the low thermally conductive filler is selected from $H_2Mg_3(SiO_3)_4$, $Mg(OH)_2$, $\gamma$-AlO(OH), $\alpha$-AlO(OH), and $Al(OH)_3$, or combinations thereof.

Embodiment 70. The composition of any of Embodiments 66-69, wherein the low thermally conductive filler is selected from $H_2Mg_3(SiO_3)_4$, $\gamma$-AlO(OH), $\alpha$-AlO(OH), and $Al(OH)_3$, or combinations thereof.

Embodiment 71. The composition of any of Embodiments 66-70, wherein the low thermally conductive filler is $H_2Mg_3(SiO_3)_4$.

Embodiment 72. The composition of any of Embodiments 1-71, wherein the thermally conductive filler component is present in an amount from about 1 wt% to about 50% wt%.

Embodiment 73. The composition of any of Embodiments 1-72, wherein the thermally conductive filler component is present in an amount from about 10 wt% to about 50% wt%.

Embodiment 74. The composition of any of Embodiments 1-73, wherein the thermally conductive filler component is present in an amount from about 20 wt% to about 40% wt%.

Embodiment 75. The composition of any of Embodiments 1-74, wherein the thermally conductive filler component comprises at least one intermediate thermally conductive filler and at least one low thermally conductive filler; wherein the intermediate thermally conductive filler component has a conductivity from about 10 W/mK to about 30 W/mK when determined in accordance with ASTM E1225; wherein the intermediate thermally conductive filler component is present in an amount from greater than 0 wt% to about 30 wt%; wherein the low thermally conductive filler component

has a conductivity less than about 10 W/mK when determined in accordance with ASTM E1225; and wherein the low thermally conductive filler component is present in an amount from greater than 0 wt% to about 30 wt%.

Embodiment 76. The composition of any of Embodiments 1-75, wherein the thermally conductive filler component comprises $TiO_2$ and $H_2Mg_3(SiO_3)_4$.

Embodiment 77. The compositions of any of Embodiments 75-76, wherein the thermally conductive filler component comprising at least one intermediate thermally conductive filler present in an amount from about 15 wt% to about 35 wt% and at least one low thermally conductive filler is present in an amount from about 5 wt% to about 20 wt%.

Embodiment 78. The compositions of any of Embodiments 75-77, wherein the thermally conductive filler component comprising at least one intermediate thermally conductive filler present in an amount from about 15 wt% to about 25 wt% and at least one low thermally conductive filler is present in an amount from about 10 wt% to about 20 wt%.

Embodiment 79. The composition of any of Embodiments 1-78, further comprising a reinforcing component.

Embodiment 80. The composition of Embodiment 79, wherein the reinforcing component is selected from glass beads, glass fiber, glass flakes, mica, talc, clay, wollastonite, zinc sulfide, zinc oxide, carbon fiber, ceramic-coated graphite, and titanium dioxide.

Embodiment 81. The composition of any of Embodiments 79-80, wherein the reinforcing component is a glass fiber.

Embodiment 82. The composition of Embodiment 81, wherein the glass fiber is continuous.

Embodiment 83. The composition of Embodiment 81, wherein the glass fiber is chopped.

Embodiment 84. The composition of Embodiment 81, wherein the glass fiber has a round, flat, or irregular cross-section.

Embodiment 85. The composition of Embodiment 84, wherein the glass fiber has a round cross-section.

Embodiment 86. The composition of Embodiment 85, wherein the glass fiber has a diameter from about 4 $\mu$m to about 15 $\mu$m.

Embodiment 87. The composition of any of Embodiments 79-86, wherein the reinforcing component is particulate.

Embodiment 88. The composition of any of Embodiments 79-86, wherein the reinforcing component is fibrous.

Embodiment 89. The composition of Embodiment 88, wherein the fibrous filler has a circular cross-section.

Embodiment 90. The composition of Embodiment 88, wherein the fibrous filler has a non-circular cross-section.

Embodiment 91. The composition of any of Embodiments 79-90, wherein the reinforcing component is present in an amount from greater than 0 wt% to about 50 wt%.

Embodiment 92. The composition of any of Embodiments 79-91, wherein the reinforcing component is present in an amount from greater than 0 wt% to about 40 wt%.

Embodiment 93. The composition of any of Embodiments 79-92, wherein the reinforcing component is present in an amount from greater than 0 wt% to about 30 wt%.

Embodiment 94. The composition of any of Embodiments 79-93, wherein the reinforcing component is present in an amount from greater than 0 wt% to about 25 wt%.

Embodiment 95. The composition of any of Embodiments 79-94, wherein the reinforcing component is present in an amount from greater than 0 wt% to about 20 wt%.

Embodiment 96. The composition of any of Embodiments 79-95, wherein the reinforcing component is present in an amount from greater than 0 wt% to about 15 wt%.

Embodiment 97. The composition of any of Embodiments 1-96, further comprising at least one flame retardant.

Embodiment 98. The composition of Embodiment 97, wherein the flame retardant is a phosphorus-containing flame retardant.

Embodiment 99. The composition of Embodiment 98, wherein the phosphorus-containing flame retardant is selected from a phosphine, a phosphine oxide, a bisphosphine, a phosphonium salt, a phosphinic acid salt, a phosphoric ester, and a phosphorous ester.

Embodiment 100. The composition of any of Embodiments 98-99, wherein the phosphorus-containing flame retardant is an aromatic cyclic phosphazene compound.

Embodiment 101. The composition of Embodiment 100, wherein the aromatic cyclic phosphazene compound has a structure represented by the formula:

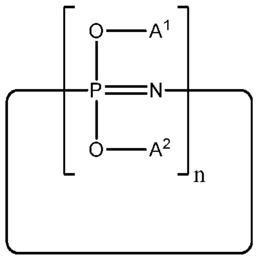

,

wherein each of A1 and A2 is independently an aryl group having 6 to 10 carbon atoms optionally substituted with 1 to 4 alkyl groups having 1 to 4 carbon atoms; and wherein n is an integer of 3 to 6.

Embodiment 102. The composition of Embodiment 101, wherein aromatic cyclic phosphazene has a structure represented by the formula:

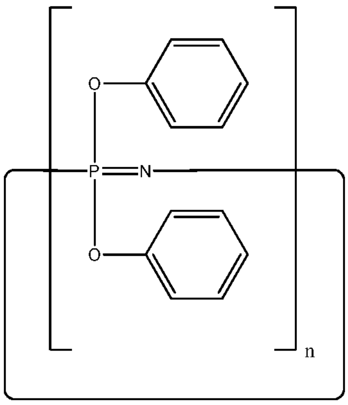

,

wherein n is 3 to 6.

Embodiment 103. The composition of any of Embodiments 98-99, wherein the phosphorus-containing flame retardant is selected from resorcinol bis(diphenyl phosphate), resorcinol bis(dixylenyl phosphate), hydroquinone bis(diphenyl phosphate), bisphenol-A bis(diphenyl phosphate), 4,4'-biphenol bis(diphenyl phosphate), triphenyl phosphate, methylneopentyl phosphite, pentaerythritol diethyl diphosphite, methyl neopentyl phosphonate, phenyl neopentyl phosphate, pentaerythritol diphenyldiphosphate, dicyclopentyl hypodiphosphate, dineopentyl hypophosphite, phenylpyrocatechol phosphite, ethylpyrocatechol phosphate and dipyrocatechol hypodiphosphate.

Embodiment 104. The composition of any of Embodiments 98-103, wherein the phosphorus-containing flame retardant comprises selected from resorcinol bis(biphenyl phosphate), bisphenol A bis(diphenyl phosphate), or hydroquinone bis(diphenyl phosphate), or mixtures thereof.

Embodiment 105. The composition of any of Embodiments 98-104, wherein the phosphorus-containing flame retardant comprises bisphenol A bis(diphenyl phosphate).

Embodiment 106. The composition of any of Embodiments 98-105, wherein the phosphorus-containing flame retardant comprises resorcinol bis(biphenyl phosphate).

Embodiment 107. The composition of any of Embodiments 97-Embodiment 106, wherein the flame retardant is present in an amount less than or equal to about 20 wt%.

Embodiment 108. The composition of any of Embodiments 98-99, wherein the flame retardant comprises a first flame retardant and a second flame retardant.

Embodiment 109. The composition of Embodiment 108, wherein the first flame retardant selected from selected from resorcinol bis(diphenyl phosphate), resorcinol bis(dixylenyl phosphate), hydroquinone bis(diphenyl phosphate), bisphenol-A bis(diphenyl phosphate), 4,4'-biphenol bis(diphenyl phosphate), triphenyl phosphate, methylneopentyl phosphite, pentaerythritol diethyl diphosphite, methyl neopentyl phosphonate, phenyl neopentyl phosphate, pentaerythritol diphenyldiphosphate, dicyclopentyl hypodiphosphate, dineopentyl hypophosphite, phenylpyrocatechol phosphite, ethylpyrocatechol phosphate and dipyrocatechol hypodiphosphate; and wherein the second flame retardant is an aromatic cyclic phosphazene compound has a structure represented by the formula:

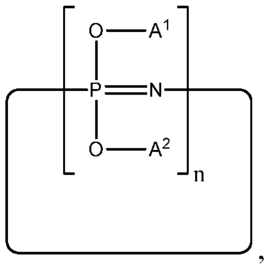

wherein each of $A^1$ and $A^2$ is independently an aryl group having 6 to 10 carbon atoms optionally substituted with 1 to 4 alkyl groups having 1 to 4 carbon atoms; and wherein n is an integer of 3 to 6.

Embodiment 110. The composition of Embodiment 109, wherein the first flame retardant selected from selected from resorcinol bis(diphenyl phosphate), resorcinol bis(dixylenyl phosphate), bisphenol-A bis(diphenyl phosphate), and 4,4'-biphenol bis(diphenyl phosphate); and wherein the second flame retardant is an aromatic cyclic phosphazene compound has a structure represented by the formula:

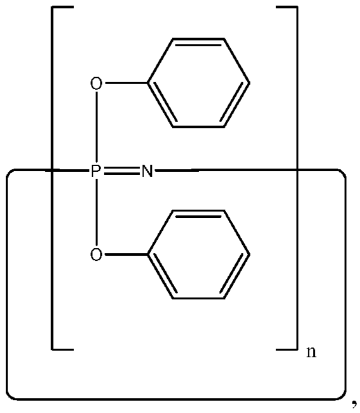

wherein n is 3 to 6.

Embodiment 111. The composition of any of Embodiments 108-110, wherein the wt% of the first flame retardant and second flame retardant together is less than or equal to about 20 wt%.

Embodiment 112. The composition of any of Embodiments 1-111, further comprising at least one additive.

Embodiment 113. The composition of Embodiment 112, wherein the additive is selected from an anti-drip agent, antioxidant, antistatic agent, chain extender, colorant, de-molding agent, dye, flow promoter, flow modifier, light stabilizer, lubricant, mold release agent, pigment, quenching agent, thermal stabilizer, UV absorbent substance, UV reflectant substance, and UV stabilizer, or combinations thereof.

Embodiment 114. The composition of Embodiment 113, wherein the anti-drip agent is present in an amount from about 0.05 wt% to about 3 wt%.

Embodiment 115. The composition of any of Embodiments 113-114, wherein the anti-drip agent is present in an amount from about 0.1 wt% to about 2 wt%.

Embodiment 116. The composition of any of Embodiments 113-115, wherein the anti-drip agent is present in an amount from about 0.1 wt% to about 1 wt%.

Embodiment 117. The composition of any of Embodiments 113-116, wherein the anti-drip agent is a styrene-acrylonitrile copolymer encapsulated polytetrafluoroethylene.

Embodiment 118. The composition of Embodiment 113, wherein the antioxidant is a primary antioxidant, a secondary antioxidant, or combinations thereof.

Embodiment 119. The composition of Embodiment 118, wherein the primary antioxidant is selected from a hindered phenol and secondary aryl amine, or a combination thereof.

Embodiment 120. The composition of Embodiment 119, wherein the hindered phenol comprises one or more compounds selected from triethylene glycol bis[3-(3-t-butyl-5-methyl-4-hydroxyphenyl)propionate], 1,6-hexanediol bis[3-(3,5-di-t-butyl-4-hydroxyphenyl)propionate], 2,4-bis(n-octylthio)-6-(4-hydroxy-3,5-di-t-butylanilino)-1,3,5-triazine, pentaerythrityl tetrakis[3-(3,5-di-t-butyl-4-hydroxyphenyl)propionate], 2,2-thiodiethylene bis[3-(3,5-di-t-butyl-4-hydroxyphenyl)propionate], octadecyl 3-(3,5-di-t-butyl-4-hydroxyphenyl)propionate, N,N'-hexamethylene bis(3,5-di-t-butyl-4-hydroxyhydrocinnamamide), tetrakis(methylene 3,5-di-tert-butyl-hydroxycinnamate)methane, and octadecyl 3,5-di-tert-butylhydroxyhydrocinnamate.

Embodiment 121. The composition of any of Embodiments 119-120, wherein the hindered phenol comprises octadecyl-3-(3,5-di-t-butyl-4-hydroxyphenyl)-propionate.

Embodiment 122. The composition of any of Embodiments 119-121, wherein the primary anti-oxidant is present in an amount from about 0.01 wt% to about 0.50 wt%.

Embodiment 123. The composition of any of Embodiments 119-122, wherein the primary anti-oxidant is present in an amount from about 0.01 wt% to about 0.20 wt%.

Embodiment 124. The composition of any of Embodiments 119-123, wherein the primary anti-oxidant is present in an amount from about 0.01 wt% to about 0.10 wt%.

Embodiment 125. The composition of Embodiment 118, wherein the secondary anti-oxidant is selected from an organophosphate and thioester, or a combination thereof.

Embodiment 126. The composition of Embodiment 125, wherein the secondary anti-oxidant comprises one or more compounds selected from tetrakis(2,4-di-tert-butylphenyl) [1,1-biphenyl]-4,4'-diylbisphosphonite, tris(2,4-di-tert-butylphenyl) phosphite, bis(2,4-di-tert-butylphenyl) pentaerythritol diphosphite, bis(2,4-dicumylphenyl)pentaerytritoldiphosphite, tris(nonyl phenyl)phosphite, and distearyl pentaerythritol diphosphite.

Embodiment 127. The composition of any of Embodiments 125-126, wherein the secondary anti-oxidant comprises tris(2,4-di-tert-butylphenyl) phosphite.

Embodiment 128. The composition of any of Embodiments 125-127, wherein the secondary anti-oxidant is present in an amount from about 0.01 wt% to about 0.50 wt%.

Embodiment 129. The composition of any of Embodiments 125-128, wherein the secondary anti-oxidant is present in an amount from about 0.01 wt% to about 0.20 wt%.

Embodiment 130. The composition of any of Embodiments 125-129, wherein the secondary anti-oxidant is present in an amount from about 0.01 wt% to about 0.10 wt%.

Embodiment 131. An article comprising any of the compositions of Embodiments 1-130.

Embodiment 132. The article of Embodiment 131, wherein the article is molded.

Embodiment 133. The article of Embodiment 132, wherein the article is extrusion molded.

Embodiment 134. The article of Embodiment 132, wherein the article is injection molded.

Embodiment 135. The article of any of Embodiments 131-134, wherein the article is selected from a computer device, electromagnetic interference device, printed circuit, Wi-Fi device, Bluetooth device, GPS device, cellular antenna device, smart phone device, automotive device, medical device, sensor device, security device, shielding device, RF antenna device, LED device and RFID device.

Embodiment 136. The article of any of Embodiments 131-135, wherein the article is selected from a computer device, electromagnetic interference device, automotive device, medical device, sensor device, security device, shielding device, RF antenna device, LED device and RFID device.

Embodiment 137. The article of any of Embodiments 131-136, wherein the article is selected from a computer device, sensor device, security device, RF antenna device, LED device and RFID device.

Embodiment 138. The article of any of Embodiments 131-137, wherein the article is selected from a computer device, LED device and RFID device.

Embodiment 139. The article of any of Embodiments 131-138, wherein the article is a LED device.

Embodiment 140. The article of any of Embodiments 135-139, wherein the LED device is a LED lamp.

Embodiment 141. The article of any of Embodiments 131-134, wherein the article is selected from a RF antenna device, cellular antenna device, smart phone device, and electromagnetic interference device.

Embodiment 142. The article of Embodiment 141, wherein the article is an external cover or frame for a RF antenna device, cellular antenna device, smart phone device, or electromagnetic interference device.

Embodiment 143. The article of Embodiment 141, wherein the article is a central frame for a RF antenna device, cellular antenna device, smart phone device, or electromagnetic interference device.

Embodiment 144. The article of Embodiments 141-143, wherein the article is a RF antenna device cover.

Embodiment 145. The article of any of Embodiments 141-144, wherein the article is a RF antenna device external frame.

Embodiment 146. The article of any of Embodiments 141-145, wherein the article is a RF antenna device central frame.

Embodiment 147. The article of any of Embodiments 141-146, wherein the article is a cellular antenna device cover.

Embodiment 148. The article of any of Embodiments 141-147, wherein the article is a cellular antenna device external frame.

Embodiment 149. The article of any of Embodiments 141-148, wherein the article is a cellular antenna device central frame.

Embodiment 150. The article of any of Embodiments 141-149, wherein the article is a smart phone device cover.

Embodiment 151. The article of any of Embodiments 141-150, wherein the article is a smart phone device external frame.

Embodiment 152. The article of any of Embodiments 141-151, wherein the article is a smart phone device central frame.

Embodiment 153. A method of preparing a blended thermoplastic composition, comprising mixing: (a) from 20 wt% to 80 wt% of a first polycarbonate polymer component; (b) from 1 wt% to 30 wt%, preferably 5 wt % to 25 wt%, or preferably 10 wt% to 20 wt%, of a second polycarbonate polymer component, wherein the second polycarbonate polymer component is a branched chain polycarbonate polymer; (c) from 1 wt% to 30 wt% of at least one polycarbonate -polysiloxane copolymer component; and (d) from greater than 0 wt% to 50 wt% of a thermally conductive filler component; wherein the combined weight percent value of all components does not exceed 100 wt%; wherein all weight percent values are based on the total weight of the composition; wherein a molded sample of the blended thermoplastic composition has a through-plane thermal conductivity when determined in accordance with ASTM E1461 of greater than or equal to 0.4 W/mK; and wherein a molded sample of the blended thermoplastic composition has an in-plane thermal conductivity when determined in accordance with ASTM E1461 of greater than or equal to 1.0 W/mK.

Embodiment 154. The method of Embodiment 153, wherein mixing comprises the steps of: (a) dry blending the following to form a polycarbonate dry blended mixture: (i) from 20 wt% to about 80 wt% of a first polycarbonate polymer component; (ii) from about 1 wt% to about 30 wt% of a second polycarbonate polymer component, wherein the second polycarbonate polymer component is a branched chain polycarbonate polymer; and (iii) from about 1 wt% to about 30 wt% of at least one polycarbonate -polysiloxane copolymer component; (b) feeding the polycarbonate dry blended mixture into an extruder apparatus; and (c) compounding in the extruder apparatus the polycarbonate dry blended mixture with from greater than 0 wt% to about 50 wt% of a thermally conductive filler component.

Embodiment 155. The method of Embodiment 154, further comprising feeding into the extruder apparatus in a downstream extruder zone from about 25 wt% to about 60 wt% of a reinforcing filler.

Embodiment 156. A method of preparing a blended thermoplastic composition, comprising the steps: (a) dry blending the following to form a polycarbonate dry blended mixture: (i) from about 20 wt% to about 80 wt% of a first polycarbonate polymer component; (ii) from about 1 wt% to about 30 wt% of a second polycarbonate polymer component, wherein the second polycarbonate polymer component is a branched chain polycarbonate polymer; and (iii) from about 1 wt% to about 30 wt% of at least one polycarbonate -polysiloxane copolymer component; (b) feeding the polycarbonate dry blended mixture into an extruder apparatus; and (c) feeding into the extruder apparatus in a downstream extruder zone from greater than 0 wt% to about 50 wt% of a thermally conductive filler component; wherein the combined weight percent value of all components does not exceed about 100 wt%; wherein all weight percent values are based on the total weight of the composition; wherein a molded sample of the blended thermoplastic composition has a through-plane thermal conductivity when determined in accordance with ASTM E1461 of greater than or equal to about 0.4 W/mK; and wherein a molded sample of the blended thermoplastic composition has an in-plane thermal conductivity when determined in accordance with ASTM E1461 of greater than or equal to about 1.0 W/mK.

Embodiment 157. The method of any of Embodiments 156, further comprising feeding into the extruder apparatus in a downstream extruder zone from greater than 0 wt% to about 50 wt% of a reinforcing component.

Embodiment 158. The method of Embodiment 157, wherein the reinforcing component is selected from glass beads, glass fiber, glass flakes, mica, talc, clay, wollastonite, zinc sulfide, zinc oxide, carbon fiber, ceramic-coated graphite, and titanium dioxide.

Embodiment 159. The method of any of Embodiments 156-158, further comprising feeding into the extruder apparatus in a downstream extruder zone from greater than 0 wt% to about 20 wt% of a flame retardant.

Embodiment 160. The method of Embodiment 159, wherein the flame retardant is a phosphorus-containing flame retardant.

Embodiment 161. The method of any of Embodiments 159-160, wherein the flame retardant is selected from a phosphine, a phosphine oxide, a bisphosphine, a phosphonium salt, a phosphinic acid salt, a phosphoric ester, and a phosphorous ester.

Embodiment 162. The method of any of Embodiment 159-161, wherein the flame retardant is selected from rescorcinol bis(diphenyl phosphate), resorcinol bis(dixylenyl phosphate), hydroquinone bis(diphenyl phosphate), bisphenol-A bis(diphenyl phosphate), 4,4'-biphenol bis(diphenyl phosphate), triphenyl phosphate, methylneopentyl phosphite, pentaerythritol diethyl diphosphite, methyl neopentyl phosphonate, phenyl neopentyl phosphate, pentaerythritol diphenyldiphosphate, dicyclopentyl hypodiphosphate, dineopentyl hypophosphite, phenylpyrocatechol phosphite, ethylpyrocatechol phosphate, dipyrocatechol hypodiphosphate, and an aromatic cyclic phosphazene compound, or combinations thereof.

Embodiment 163. The method of any of Embodiments 156-162, further comprising feeding into the extruder apparatus in a downstream extruder zone from greater than 0 wt% to about 5 wt% of at least one additive.

Embodiment 164. The method of Embodiment 163, wherein the additive is selected from an anti-drip agent, antioxidant, antistatic agent, chain extender, colorant, de-molding agent, dye, flow promoter, flow modifier, light stabilizer,

lubricant, mold release agent, pigment, quenching agent, thermal stabilizer, UV absorbent substance, UV reflectant substance, and UV stabilizer, or combinations thereof.

Without further elaboration, it is believed that one skilled in the art can, using the description herein, utilize the present invention. The following examples are included to provide addition guidance to those skilled in the art of practicing the claimed invention. The examples provided are merely representative of the work and contribute to the teaching of the present invention. Accordingly, these examples are not intended to limit the invention in any manner.

While embodiments of the present invention can be described and claimed in a particular statutory class, such as the system statutory class, this is for convenience only and one of skill in the art will understand that each embodiment of the present invention can be described and claimed in any statutory class. Unless otherwise expressly stated, it is in no way intended that any method or embodiment set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of embodiments described in the specification.

EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (*e.g.*, amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The materials shown in Table 1 were used to prepare the compositions described and evaluated herein. All samples were prepared by melt extrusion on a Toshiba Twin screw extruder, using different melt temperature and rotations per minute (RPM) according to different base resin. Tests were all conducted in accordance with ASTM standards, referenced in each test below.

Izod Impact strength was determined at 23 °C in accordance with ASTM D256 (Notched Izod impact strength, "NII"), and in accordance with ASTM D4812 (Unnotched Izod impact strength, "UII").

Tensile testing was carried out at 5 millimeters per minute (mm/min) in accordance with ASTM D638.

Flexural testing was carried out at 1.27 mm/min in accordance with ASTM D790.

Density was determined using a water immersion method in accordance with ASTM D792.

Thermal conductivity ("TC") was conducted in accordance with ASTM E1461 measured using a Nanoflash LFA 447 xenon flash apparatus (Netzsch Group). The reference standard was pyroceram of similar thickness. Measurements are provided in units of $\kappa$ (W/mK). The measurement determines the thermal diffusivity ($\alpha$, square centimeters per second ($cm^2/s$)) and the specific heat (Cp, joules per gram kelvin (J/gK)) of the sample, together with the density ($\rho$, grams per cubic centimeter ($g/cm^3$)). Density was determined using a water immersion method (ASTM D792). The product of three values ($\alpha$, $\rho$, and Cp) gives the thermal conductivity in the through plane according to:

$$\kappa = \alpha(T) \times Cp(T) \times \rho(T).$$

Table 1.

| Component | Chemical description | Source |
|---|---|---|
| PC1 | Copolymer of sebacic acid - BPA comprising about 8.5 mol% sebacic acid with a Mw of about 70,000 Daltons. | SABIC Innovative Plastics ("SABIC I.P.") |

(continued)

| Component | Chemical description | Source |
|---|---|---|
| PCPS1 | BPA polycarbonate-polydimethylsiloxane block copolymer comprising about 20 wt% of siloxane and about 80 wt% by of BPA; PCP end-capped; with a polydiorganosiloxane chain length of about 45 and having a Mw of about 29,900 Daltons. | SABIC I.P. |
| PCR | THPE branched polycarbonate resin made by the interfacial process with an average Mw of about 37,700 Daltons. | SABIC I.P. |
| T1 | Talc GH7(05), D50- 5.8 μM, non-coating. | Hayashi Kasei Co., Ltd. |
| TO2 | $TiO_2$ (Type II per ASTM D476) with surface treatment comprising alumina and polysiloxane; available under the trade name K2233, D50 = 300 nanometers (nm). | Kronos, Inc. |

The materials used for preparing the formulations described herein are listed in Table 1 above. The formulations were prepared using a Twin screw extruder (Toshiba TEM-37BS, L/D=40.5) with the temperature of the extruder barrel set at 260°C. Pellets extruded from extruder were then injection molded into 80×10×3 mm bar, cut into 10×10×3 mm square sample for through plane TC measurement, Φ100×0.4 mm sheet and cut into Φ25×0.4 mm round sample for in plane TC measurement.

Exemplary formulations #1-6 are shown in Table 2, using the materials shown in Table 1. Molded samples were prepared using these formulations and characterized by various tests described herein above with the results shown in Table 3. All of the formulations contain the same thermally conductive fillers and filler loading. Formulation 1 only contains a high Mw PC. Formulations 2 and 3 contain 10 wt% polycarbonate-polysiloxane copolymer and branched PC, respectively. Addition of either 10 wt% EXL-PC (Formulation 2) or 10 wt% branched PC (Formulation 3) led to modest improvements in notched impact strength and tensile elongation compared to Formulation 1. Formulation 4 contains 10 wt% of both polycarbonate-polysiloxane copolymer and branched PC. Significant improvements in notched impact strength, unnotched impact strength, and tensile elongation were observed upon addition of 10 wt% of both EXL-PC and branched PC (Formulation 4). Additional increases in polymer loading (Formulations 5 and 6) did not lead to further increases in notched impact strength. Formulation 4 also offered an increase in Mw compared to Formulations 2 and 3.

Table 2.

| Item Description | Unit | 1 | 2 | 3 | 4 | 5 | 6 |
|---|---|---|---|---|---|---|---|
| PC1 | % | 70 | 60 | 60 | 50 | 35 | 35 |
| PCPS 1 | % | -- | 10 | -- | 10 | 15 | 15 |
| PCR | % | -- | -- | 10 | 10 | 20 | 20 |
| T1 | % | 10 | 10 | 10 | 10 | 10 | 10 |
| TO2 | % | 20 | 20 | 20 | 20 | 20 | 20 |
| Formulation Total | | 100 | 100 | 100 | 100 | 100 | 100 |

Table 3.

| Test Description | Unit | 1 | 2 | 3 | 4 | 5 | 6 |
|---|---|---|---|---|---|---|---|
| Notched Izod Impact Strength at r.t. - Avg | J/m | 50.6 | 121 | 61.4 | 513 | 255 | 245 |
| Unnotched Izod Impact Strength at r.t. - Avg | J/m | 1520 | 1290 | 1640 | 2160 | 1850 | 1570 |
| Density-Avg | - | 1.470 | 1.464 | 1.465 | 1.464 | 1.462 | 1.475 |
| t/p Thermal conductivity | W/(m·K) | 0.45 | 0.45 | 0.44 | 0.49 | 0.54 | 0.45 |
| In plane Thermal conductivity | w/(m·K) | 1.49 | 2.03 | 2.12 | 1.57 | 1.53 | 1.71 |

(continued)

| Test Description | | Unit | 1 | 2 | 3 | 4 | 5 | 6 |
|---|---|---|---|---|---|---|---|---|
| Modulus of Elasticity-Avg | | MPa | 3982.4 | 3029 | 3747 | 3098.2 | 2950 | 2950.6 |
| Stress at Break-Avg | | MPa | 49.8 | 36.8 | 45 | 35.1 | 36.8 | 33.2 |
| Elongation at Break-Avg | | % | 4.57 | 9.49 | 6.37 | 11.98 | 10.88 | 9.97 |
| | Mw | Daltons | 51808 | 58010 | 57147 | 63312 | 61598 | 61552 |
| | Mn | Daltons | 19495 | 21157 | 20495 | 22590 | 21155 | 21104 |
| | D | - | 2.66 | 2.74 | 2.79 | 2.8 | 2.91 | 2.92 |

Exemplary formulations #7-11 are shown in Table 4, using the materials shown in Table 1. Molded samples were prepared using these formulations and characterized by various tests described herein above with the results shown in Table 5. The effect of using polycarbonate-polysiloxane copolymer is shown in Table 5. In formulations 7-11 the thermally conductive filler loading was increased to 20 wt%. Formulation 7 is the control sample, with only the HFD-PC (PC1). Formulations 8 and 9 also contain 15 wt% polycarbonate-polysiloxane copolymer (PCPS1) and formulation 10 also contains 15 wt% branched PC (PCR). The results indicate that notched impact strength and tensile elongation were improved in Formulations 8-10 compared to Formulation 7. Significant improvements in notched impact strength and tensile elongation were observed upon addition of 10 wt% of both polycarbonate-polysiloxane copolymer and branched PC (Formulation 11). Formulation 11 also offered an increase in Mw compared to Formulations 8-10. Thermal conductivity was only minimally reduced from 0.64 to 0.50 W/(m·K) (through plane) and from 2 to 1.6 W/(m·K) (in plane) (Formulation 11).

Table 4.

| Item Description | Unit | 7 | 8 | 9 | 10 | 11 |
|---|---|---|---|---|---|---|
| PC1 | % | 60 | 45 | 45 | 45 | 40 |
| PCPS1 | % | -- | 15 | 15 | -- | 10 |
| PCR | % | -- | -- | -- | 15 | 10 |
| T1 | % | 20 | 20 | 20 | 20 | 20 |
| TO2 | % | 20 | 20 | 20 | 20 | 20 |
| Formulation Total | | 100 | 100 | 100 | 100 | 100 |

Table 5.

| Test Description | | Unit | 7 | 8 | 9 | 10 | 11 |
|---|---|---|---|---|---|---|---|
| Notched Izod Impact Strength at r.t. - Avg | | J/m | 36.8 | 49.8 | 49.2 | 41.5 | 108 |
| Unnotched Izod Impact Strength at r.t. - Avg | | J/m | 357 | 389 | 293 | 380 | 360 |
| Density-Avg | | - | 1.577 | 1.558 | 1.563 | 1.581 | 1.586 |
| t/p Thermal conductivity | | W/(m·K) | 0.64 | 0.58 | 0.58 | 0.69 | 0.50 |
| In plane Thermal conductivity | | W/(m·K) | 2.00 | 1.67 | 1.50 | 2.11 | 1.60 |
| Modulus of Elasticity-Avg | | MPa | 5671.8 | 4100 | 4170 | 5768 | 4302.2 |
| Stress at Break-Avg | | MPa | 60.3 | 45.6 | 45.5 | 61.2 | 43.7 |
| Elongation at Break-Avg | | % | 1.97 | 2.2 | 2.09 | 2.09 | 2.45 |
| | Mw | Daltons | 48985 | 49088 | 50925 | 20392 | 26785 |
| | Mn | Daltons | 18949 | 18392 | 18964 | 18146 | 20124 |
| | D | - | 2.59 | 2.67 | 2.69 | 2.78 | 2.82 |

The patentable scope of the invention is defined by the claims, and can include other examples that occur to those skilled in the art. Such other examples are intended to be within the scope of the claims if they have structural elements that do not differ from the literal language of the claims.

## Claims

1. A blended thermoplastic composition comprising:

   a. from 20 wt% to 80 wt% of a first polycarbonate polymer component;
   b. from 1 wt% to about 30 wt%, preferably 5 wt% to 25 wt%, or preferably 10 wt% to 20 wt%, of a second polycarbonate polymer component, wherein the second polycarbonate polymer component is a branched chain polycarbonate polymer;
   c. from 1 wt% to 30 wt% of at least one polycarbonate-polysiloxane copolymer component; and
   d. from greater than 0 wt% to 50 wt% of a thermally conductive filler component;

   wherein all weight percent values are based on the total weight of the composition and the combined weight percent value of all components does not exceed 100 wt%;
   wherein a molded sample of the blended thermoplastic composition has a through-plane thermal conductivity when determined in accordance with ASTM E1461 of greater than or equal to 0.4 W/mK; and
   wherein a molded sample of the blended thermoplastic composition has an in-plane thermal conductivity when determined in accordance with ASTM E1461 of greater than or equal to 1.0 W/mK.

2. The composition of claim 1, wherein the first polycarbonate polymer component is a copolymer comprising repeating units derived from BPA, sebacic acid, or a combination of sebacic acid and BPA.

3. The composition of any one of claims 1-2, wherein the first polycarbonate polymer component has a weight average molecular weight from 15,000 to 75,000 grams/mole, as measured by gel permeation chromatography using BPA polycarbonate standards.

4. The composition of any one of claims 1-3, wherein the second polycarbonate polymer component comprises residues derived from tris-(hydroxyphenyl)ethane.

5. The composition of any one of claims 1-4, wherein the second polycarbonate polymer component is end-capped with p-hydroxybenzonitrile.

6. The composition of any one of claims 1-5, wherein the polycarbonate-polysiloxane copolymer component comprises a polysiloxane block from 15 wt% to 25 wt% of the polycarbonate-polysiloxane copolymer component.

7. The composition of any one of claims 1-6, wherein the thermally conductive filler is selected from AlN, $Al_4C_3$, $Al_2O_3$, BN, AlON, $MgSiN_2$, SiC, $Si_3N_4$, graphite, expanded graphite, graphene, carbon fiber, ZnS, CaO, MgO, ZnO, $TiO_2$, $H_2Mg_3(SiO_3)_4$, $CaCO_3$, $Mg(OH)_2$, mica, BaO, $\gamma$-AlO(OH), $\alpha$-AlO(OH), $Al(OH)_3$, $BaSO_4$, $CaSiO_3$ $ZrO_2$, $SiO_2$, a glass bead, a glass fiber, MgO•x$Al_2O_3$, $CaMg(CO_3)_2$, and a clay, or a combinations thereof

8. The composition of any one of claims 1-7, wherein the thermally conductive filler component comprises at least one intermediate thermally conductive filler and at least one low thermally conductive filler; wherein the intermediate thermally conductive filler component has a conductivity from 10 W/mK to 30 W/mK when determined in accordance with ASTM E1225; wherein the intermediate thermally conductive filler component is present in an amount from greater than 0 wt% to 30 wt%; wherein the low thermally conductive filler component has a conductivity less than 10 W/mK when determined in accordance with ASTM E1225; and wherein the low thermally conductive filler component is present in an amount from greater than 0 wt% to 30 wt%.

9. The composition of any one of claims 1-8, further comprising a reinforcing component in an amount from greater than 0 wt% to 50 wt%, wherein the reinforcing component is selected from glass beads, glass fiber, glass flakes, mica, talc, clay, wollastonite, zinc sulfide, zinc oxide, carbon fiber, ceramic-coated graphite, and titanium dioxide.

10. The composition of any of claims 1-9, further comprising at least one flame retardant, wherein the flame retardant is present in an amount less than or equal to 20 wt%, wherein the flame retardant is a phosphorus-containing flame

retardant selected from a phosphine, a phosphine oxide, a bisphosphine, a phosphonium salt, a phosphinic acid salt, a phosphoric ester, a phosphorous ester, and an aromatic cyclic phosphazene compound.

**11.** The composition of any of claims 1-10, further comprising at least one additive, wherein the additive is selected from an anti-drip agent, antioxidant, antistatic agent, chain extender, colorant, de-molding agent, dye, flow promoter, flow modifier, light stabilizer, lubricant, mold release agent, pigment, quenching agent, thermal stabilizer, UV absorbent substance, UV reflectant substance, and UV stabilizer, or combinations thereof.

**12.** An article comprising the composition of any of claims 1-11.

**13.** The article of claim 12, wherein the article is extrusion molded or injection molded, and wherein the article is selected from a computer device, electromagnetic interference device, printed circuit, Wi-Fi device, Bluetooth device, GPS device, cellular antenna device, smart phone device, automotive device, medical device, sensor device, security device, shielding device, RF antenna device, LED device and RFID device.

**14.** A method of preparing a blended thermoplastic composition, comprising mixing:

a. from 20 wt% to 80 wt% of a first polycarbonate polymer component;
b. from 1 wt% to 30 wt%, preferably 5 wt% to 25 wt%, or more preferably 10 wt% to 20 wt%, of a second polycarbonate polymer component, wherein the second polycarbonate polymer component is a branched chain polycarbonate polymer;
c. from 1 wt% to 30 wt% of at least one polycarbonate -polysiloxane copolymer component; and
d. from greater than 0 wt% to 50 wt% of a thermally conductive filler component;

wherein all weight percent values are based on the total weight of the composition and the combined weight percent value of all components does not exceed 100 wt%;
wherein a molded sample of the blended thermoplastic composition has a through-plane thermal conductivity when determined in accordance with ASTM E1461 of greater than or equal to 0.4 W/mK; and
wherein a molded sample of the blended thermoplastic composition has an in-plane thermal conductivity when determined in accordance with ASTM E1461 of greater than or equal to 1.0 W/mK.

**15.** The method of claim 14, wherein mixing comprises the steps of:

a. dry blending the following to form a polycarbonate dry blended mixture:

i. from 20 wt% to 80 wt% of a first polycarbonate polymer component;
ii. from 1 wt% to about 30 wt%, preferably 5 wt% to 25 wt%, or preferably 10 wt% to 20 wt%, of a second polycarbonate polymer component, wherein the second polycarbonate polymer component is a branched chain polycarbonate polymer;
iii. from 1 wt% to 30 wt% of at least one polycarbonate -polysiloxane copolymer component;

b. feeding the polycarbonate dry blended mixture into an extruder apparatus; and
c. compounding in the extruder apparatus the polycarbonate dry blended mixture with from greater than 0 wt% to 50 wt% of a thermally conductive filler component.

**16.** The method of any one of claims 14-15, further comprising feeding into the extruder apparatus in a downstream extruder zone from 25 wt% to 60 wt% of a reinforcing filler, from greater than 0 wt% to 50 wt% of a reinforcing component, from greater than 0 wt% to 20 wt% of a flame retardant, and/or from greater than 0 wt% to 5 wt% of at least one additive.

**Patentansprüche**

**1.** Vermischte thermoplastische Zusammensetzung, umfassend:

a. von 20 Gew.-% bis 80 Gew.-% einen ersten Polycarbonatpolymer-Bestandteil;
b. von 1 Gew.-% bis etwa 30 Gew.-%, vorzugsweise 5 Gew-% bis 25 Gew.-% oder vorzugsweise 10 Gew.-% bis 20 Gew.-%, einen zweiten Polycarbonatpolymer-Bestandteil, wobei der zweite Polycarbonatpolymer-Bestandteil ein verzweigtkettiges Polycarbonatpolymer ist;
c. von 1 Gew.-% bis 30 Gew.-% mindestens einen Polycarbonat-Polysiloxan-Copolymer-Bestandteil; und
d. von mehr als 0 Gew.-% bis 50 Gew.-% einen wärmeleitfähigen Füllmittelbestandteil;

wobei sich alle Gewichtsprozentwerte auf das Gesamtgewicht der Zusammensetzung beziehen und der kombinierte Gewichtsprozentwert aller Bestandteile 100 Gew.-% nicht überschreitet;
wobei ein geformtes Muster der vermischten thermoplastischen Zusammensetzung eine Wärmeleitfähigkeit durch die Ebene, wenn in Übereinstimmung mit ASTM E1461 bestimmt, von mehr als oder gleich 0,4 W/mK aufweist; und wobei ein geformtes Muster der vermischten thermoplastischen Zusammensetzung eine Wärmeleitfähigkeit in der Ebene, wenn in Übereinstimmung mit ASTM E1461 bestimmt, von mehr als oder gleich 1,0 W/mK aufweist.

**2.** Zusammensetzung gemäß Anspruch 1, wobei der erste Polycarbonatpolymer-Bestandteil ein Copolymer ist, umfassend von BPA, Sebacinsäure oder einer Kombination von Sebacinsäure und BPA abgeleitete Wiederholungseinheiten.

**3.** Zusammensetzung gemäß einem der Ansprüche 1-2, wobei der erste Polycarbonatpolymer-Bestandteil ein gewichtsgemitteltes Molekulargewicht von 15,000 bis 75,000 Gramm/Mol aufweist, wie durch Gelpermeationschromatographie unter Verwendung von BPA-Polycarbonat-Standards gemessen.

**4.** Zusammensetzung gemäß einem der Ansprüche 1-3, wobei der zweite Polycarbonatpolymer-Bestandteil von Tris(hydroxyphenyl)ethan abgeleitete Reste umfasst.

**5.** Zusammensetzung gemäß einem der Ansprüche 1-4, wobei der zweite Polycarbonatpolymer-Bestandteil mit p-Hydroxybenzonitril endverkappt ist.

**6.** Zusammensetzung gemäß einem der Ansprüche 1-5, wobei der Polycarbonat-Polysiloxan-Copolymer-Bestandteil einen Polysiloxanblock von 15 Gew.-% bis 25 Gew.-% des Polycarbonat-Polysiloxan-Copolymer-Bestandteils umfasst.

**7.** Zusammensetzung gemäß einem der Ansprüche 1-6, wobei das wärmeleitfähige Füllmittel ausgewählt ist aus AlN, $Al_4C_3$, $Al_2O_3$, BN, AlON, $MgSiN_2$, SiC, $Si_3N_4$, Graphit, expandiertem Graphit, Graphen, Kohlenstofffaser, ZnS, CaO, MgO, ZnO, $TiO_2$, $H_2Mg_3(SiO_3)_4$, $CaCO_3$, $Mg(OH)_2$, Glimmer, BaO, $\gamma$-AlO(OH), $\alpha$-AlO(OH), $Al(OH)_3$, $BaSO_4$, $CaSiO_3$ $ZrO_2$, $SiO_2$, einem Glaskügelchen, einer Glasfaser, $MgO{\cdot}xAl_2O_3$, $CaMg(CO_3)_2$, und einer Tonerde oder Kombinationen davon.

**8.** Zusammensetzung gemäß einem der Ansprüche 1-7, wobei der wärmeleitfähige Füllmittelbestandteil mindestens ein Füllmittel mittlerer Wärmeleitfähigkeit und mindestens ein Füllmittel geringer Wärmeleitfähigkeit umfasst; wobei der Füllmittelbestandteil mittlerer Wärmeleitfähigkeit eine Leitfähigkeit von 10 W/mK bis 30 W/mK aufweist, wenn in Übereinstimmung mit ASTM E1225 bestimmt; wobei der Füllmittelbestandteil mittlerer Wärmeleitfähigkeit in einer Menge von mehr als 0 Gew.-% bis 30 Gew.-% vorliegt; wobei der Füllmittelbestandteil geringer Wärmeleitfähigkeit eine Leitfähigkeit von weniger als 10 W/mK aufweist, wenn in Übereinstimmung mit ASTM E1225 bestimmt; und wobei der Füllmittelbestandteil geringer Wärmeleitfähigkeit in einer Menge von mehr als 0 Gew.-% bis 30 Gew.-% vorliegt.

**9.** Zusammensetzung gemäß einem der Ansprüche 1-8, ferner umfassend einen verstärkenden Bestandteil in einer Menge von mehr als 0 Gew.-% bis 50 Gew.-%, wobei der verstärkende Bestandteil ausgewählt ist aus Glaskügelchen, Glasfaser, Glasflocken, Glimmer, Talk, Tonerde, Wollastonit, Zinksulfid, Zinkoxid, Kohlenstofffaser, keramikbeschichtetem Graphit und Titandioxid.

**10.** Zusammensetzung gemäß einem der Ansprüche 1-9, ferner umfassend mindestens ein Flammschutzmittel, wobei das Flammschutzmittel in einer Menge von weniger als oder gleich 20 Gew.-% vorliegt, wobei das Flammschutzmittel ein phosphorhaltiges Flammschutzmittel ist, ausgewählt aus einem Phosphin, einem Phosphinoxid, einem Bisphosphin, einem Phosphoniumsalz, einem Phosphinsäuresalz, einem Phosphorsäureester, einem Phosphonsäureester und einer aromatischen cyclischen Phosphazenverbindung.

**11.** Zusammensetzung gemäß einem der Ansprüche 1-10, ferner umfassend mindestens einen Zusatzstoff, wobei der Zusatzstoff ausgewählt ist aus einem Antitropfmittel, Antioxidationsmittel, Antistatikmittel, Kettenverlängerer, Färbemittel, Entformungsmittel, Farbstoff, Fließhilfsmittel, Verlaufmittel, Lichtstabilisator, Schmiermittel, Formtrennmittel, Pigment, Quenchmittel, Wärmestabilisator, einer UV-Absorptionssubstanz, UV-Reflektionssubstanz und einem UV-Stabilisator oder Kombinationen davon.

**12.** Artikel, umfassend die Zusammensetzung gemäß einem der Ansprüche 1-11.

**13.** Artikel gemäß Anspruch 12, wobei der Artikel extrusionsgeformt oder injektionsgeformt ist und wobei der Artikel ausgewählt ist aus einer Computervorrichtung, elektromagnetischen Interferenz-Vorrichtung, Leiterplatte, Wi-Fi-Vorrichtung, Bluetooth-Vorrichtung, GPS-Vorrichtung, Funkantennenvorrichtung, Smartphonevorrichtung, Automobilvorrichtung, medizinischen Vorrichtung, Sensorvorrichtung, Sicherheitsvorrichtung, Abschirmungsvorrichtung, HF-Antennenvorrichtung, LED-Vorrichtung und RFID-Vorrichtung.

**14.** Verfahren zum Zubereiten einer vermischten thermoplastischen Zusammensetzung, umfassend Mischen von:

a. von 20 Gew.-% bis 80 Gew.-% eines ersten Polycarbonatpolymer-Bestandteils;
b. von 1 Gew.-% bis 30 Gew.-%, vorzugsweise 5 Gew.-% bis 25 Gew.-% oder mehr bevorzugt 10 Gew.-% bis 20 Gew.-%, eines zweiten Polycarbonatpolymer-Bestandteils, wobei der zweite Polycarbonatpolymer-Bestandteil ein verzweigtkettiges Polycarbonatpolymer ist;
c. von 1 Gew.-% bis 30 Gew.-% mindestens eines Polycarbonat-Polysiloxan-Copolymer-Bestandteils; und
d. von mehr als 0 Gew.-% bis 50 Gew.-% eines wärmeleitfähigen Füllmittelbestandteils;

wobei sich alle Gewichtsprozentwerte auf das Gesamtgewicht der Zusammensetzung beziehen und der kombinierte Gewichtsprozentwert aller Bestandteile 100 Gew.-% nicht überschreitet;
wobei ein geformtes Muster der vermischten thermoplastischen Zusammensetzung eine Wärmeleitfähigkeit durch die Ebene, wenn in Übereinstimmung mit ASTM E1461 bestimmt, von mehr als oder gleich 0,4 W/mK aufweist; und wobei ein geformtes Muster der vermischten thermoplastischen Zusammensetzung eine Wärmeleitfähigkeit in der Ebene, wenn in Übereinstimmung mit ASTM E1461 bestimmt, von mehr als oder gleich 1,0 W/mK aufweist.

**15.** Verfahren gemäß Anspruch 14, wobei Mischen die folgenden Schritte umfasst:

a. Trockenvermischen des Folgenden, um eine trockenvermischte Polycarbonat-Mischung zu bilden:

i. von 20 Gew.-% bis 80 Gew.-% eines ersten Polycarbonatpolymer-Bestandteils;
ii. von 1 Gew.-% bis etwa 30 Gew.-%, vorzugsweise 5 Gew.-% bis 25 Gew.-% oder vorzugsweise 10 Gew.-% bis 20 Gew.-% eines zweiten Polycarbonatpolymer-Bestandteils, wobei der zweite Polycarbonatpolymer-Bestandteil ein verzweigtkettiges Polycarbonatpolymer ist;
iii. von 1 Gew.-% bis 30 Gew.-% von mindestens einem Polycarbonat-Polysiloxan-Copolymer-Bestandteil;

b. Zuführen der trockenvermischten Polycarbonat-Mischung in eine Extrusionsanlage; und
c. Kompoundieren der trockenvermischten Polycarbonat-Mischung mit von mehr als 0 Gew.-% bis 50 Gew.-% eines wärmeleitfähigen Füllmittelbestandteils in der Extrusionsanlage.

**16.** Verfahren gemäß einem der Ansprüche 14-15, ferner umfassend Zuführen, in eine nachgelagerte Extrusionszone der Extrusionsanlage, von 25 Gew.-% bis 60 Gew.-% eines verstärkenden Füllmittels, von mehr als 0 Gew.-% bis 50 Gew.-% eines verstärkenden Bestandteils, von mehr als 0 Gew.-% bis 20 Gew.-% eines Flammschutzmittels und/oder von mehr als 0 Gew.-% bis 5 Gew.-% von mindestens einem Zusatzstoff.

## Revendications

**1.** Composition thermoplastique mélangée comprenant :

a. de 20% en poids à 80% en poids d'un premier composant polymère de polycarbonate ;
b. de 1% en poids à environ 30% en poids, de préférence de 5% en poids à 25% en poids, ou de préférence de 10% en poids à 20% en poids, d'un deuxième composant polymère de polycarbonate, où le deuxième composant polymère de polycarbonate est un polymère de polycarbonate à chaîne ramifiée ;
c. de 1% en poids à 30% en poids d'au moins un composant copolymère de polycarbonate-polysiloxane ; et
d. de plus de 0% en poids à 50% en poids d'un composant de charge thermiquement conductrice ;

dans laquelle toutes les valeurs en pourcentage en poids sont basées sur le poids total de la composition et la valeur en pourcentage en poids combinée de tous les composants ne dépasse pas 100% en poids ;
dans laquelle un échantillon moulé de la composition thermoplastique mélangée a une conductivité thermique à travers le plan lorsqu'elle est déterminée conformément à la norme ASTM E1461 supérieure ou égale à 0,4 W/mK ; et
dans laquelle un échantillon moulé de la composition thermoplastique mélangée a une conductivité thermique dans le plan lorsqu'elle est déterminée conformément à la norme ASTM E1461 supérieure ou égale à 1,0 W/mK.

**2.** Composition de la revendication 1, dans laquelle le premier composant polymère de polycarbonate est un copolymère comprenant des unités de répétition dérivées du BPA, de l'acide sébacique ou d'une combinaison de l'acide sébacique et du BPA.

**3.** Composition de l'une quelconque des revendications 1 et 2, dans laquelle le premier composant polymère de polycarbonate a un poids moléculaire moyen en poids allant de 15000 à 75000 grammes/mole, tel que mesuré par chromatographie par perméation de gel en utilisant des étalons polycarbonate de BPA.

**4.** Composition de l'une quelconque des revendications 1 à 3, dans laquelle le deuxième composant polymère de polycarbonate comprend des résidus dérivés du tris-(hydroxyphényl)éthane.

**5.** Composition de l'une quelconque des revendications 1 à 4, dans laquelle le deuxième composant polymère de polycarbonate est coiffé en extrémité par le p-hydroxybenzonitrile.

**6.** Composition de l'une quelconque des revendications 1 à 5, dans laquelle le composant copolymère de polycarbonate-polysiloxane comprend un bloc polysiloxane de 15% en poids à 25% en poids du composant copolymère de polycarbonate-polysiloxane.

**7.** Composition de l'une quelconque des revendications 1 à 6, dans laquelle la charge thermiquement conductrice est choisie parmi AlN, $Al_4C_3$, $Al_2O_3$, BN, AlON, $MgSiN_2$, SiC, $Si_3N_4$, le graphite, le graphite expansé, le graphène, une fibre de carbone, ZnS, CaO, MgO, ZnO, $TiO_2$, $H_2Mg_3(SiO_3)_4$, $CaCO_3$, $Mg(OH)_2$, le mica, BaO, $\gamma$-AlO(OH), $\alpha$-AlO(OH), $Al(OH)_3$, $BaSO_4$, $CaSiO_3$ $ZrO_2$, $SiO_2$, une bille de verre, une fibre de verre, $MgO{\cdot}xAl_2O_3$, $CaMg(CO_3)_2$, et une argile, ou une combinaison de ceux-ci.

**8.** Composition de l'une quelconque des revendications 1 à 7, dans laquelle le composant de charge thermiquement conductrice comprend au moins une charge de conduction thermique intermédiaire et au moins une charge de faible conduction thermique ; où le composant de charge de conduction thermique intermédiaire a une conductivité allant de 10 W/mK à 30 W/mK lorsqu'elle est déterminée conformément à la norme ASTM E1225 ; où le composant de charge de conduction thermique intermédiaire est présent en une quantité de plus de 0% en poids à 30% en poids ; où le composant de charge de faible conduction thermique a une conductivité inférieure à 10 W/mK lorsqu'elle est déterminée conformément à la norme ASTM E1225 ; et où le composant de charge de faible conduction thermique est présent en une quantité de plus de 0% en poids à 30% en poids.

**9.** Composition de l'une quelconque des revendications 1 à 8, comprenant en outre un composant de renforcement en une quantité de plus de 0% en poids à 50% en poids, où le composant de renforcement est choisi parmi des billes de verre, des fibres de verre, des flocons de verre, le mica, le talc, l'argile, la wollastonite, le sulfure de zinc, l'oxyde de zinc, une fibre de carbone, le graphite revêtu de céramique et le dioxyde de titane.

**10.** Composition de l'une des revendications 1 à 9, comprenant en outre au moins un ignifuge,
dans laquelle l'ignifuge est présent en une quantité inférieure ou égale à 20% en poids, dans laquelle l'ignifuge est un ignifuge contenant du phosphore choisi parmi une phosphine, un oxyde de phosphine, une bisphosphine, un sel de phosphonium, un sel d'acide phosphinique, un ester phosphorique, un ester phosphoreux et un composé de phosphazène cyclique aromatique.

**11.** Composition de l'une des revendications 1 à 10, comprenant en outre au moins un additif, où l'additif est choisi parmi un agent anti-gouttes, un antioxydant, un agent antistatique, un agent d'allongement de chaîne, un colorant, un agent de démoulage, une matière colorante, un promoteur d'écoulement, un modificateur d'écoulement, un agent photostabilisant, un lubrifiant, un démoulant, un pigment, un agent de refroidissement, un stabilisateur thermique, une substance absorbant les UV, une substance réfléchissant les UV et un stabilisateur UV, ou des combinaisons de ceux-ci.

**12.** Article comprenant la composition de l'une des revendications 1 à 11.

**13.** Article de la revendication 12, dans lequel l'article est moulé par extrusion ou moulé par injection, et dans lequel l'article est choisi parmi un dispositif informatique, un dispositif d'interférence électromagnétique, un circuit imprimé, un dispositif Wi-Fi, un dispositif Bluetooth, un dispositif GPS, un dispositif d'antenne cellulaire, un dispositif de téléphone intelligent, un dispositif automobile, un dispositif médical, un dispositif de détection, un dispositif de sécurité, un dispositif de protection, un dispositif d'antenne RF, un dispositif LED et un dispositif RFID.

**14.** Procédé de préparation d'une composition thermoplastique mélangée, comprenant le fait de mélanger :

a. de 20% en poids à 80% en poids d'un premier composant polymère de polycarbonate ;
b. de 1% en poids à 30% en poids, de préférence de 5% en poids à 25% en poids, ou plus préférablement de 10% en poids à 20% en poids, d'un deuxième composant polymère de polycarbonate, où le deuxième composant polymère de polycarbonate est un polymère de polycarbonate à chaîne ramifiée ;
c. de 1% en poids à 30% en poids d'au moins un composant copolymère de polycarbonate-polysiloxane ; et
d. de plus de 0% en poids à 50% en poids d'un composant de charge thermiquement conductrice ;

où toutes les valeurs en pourcentage en poids sont basées sur le poids total de la composition et la valeur en pourcentage en poids combinée de tous les composants ne dépasse pas 100% en poids ;
où un échantillon moulé de la composition thermoplastique mélangée a une conductivité thermique à travers le plan lorsqu'elle est déterminée conformément à la norme ASTM E1461 supérieure ou égale à 0,4 W/mK ; et
où un échantillon moulé de la composition thermoplastique mélangée a une conductivité thermique dans le plan lorsqu'elle est déterminée conformément à la norme ASTM E1461 supérieure ou égale à 1,0 W/mK.

**15.** Procédé de la revendication 14, dans lequel le mélange comprend les étapes qui consistent :

a. à mélanger à sec ce qui suit pour former un mélange sec à base de polycarbonate :

i. de 20% en poids à 80% en poids d'un premier composant polymère de polycarbonate ;
ii. de 1% en poids à environ 30% en poids, de préférence de 5% en poids à 25% en poids, ou de préférence de 10% en poids à 20% en poids, d'un deuxième composant polymère de polycarbonate, où le deuxième composant polymère de polycarbonate est un polymère de polycarbonate à chaîne ramifiée ;
iii. de 1% en poids à 30% en poids d'au moins un composant copolymère de polycarbonate-polysiloxane ;

b. à introduire le mélange sec à base de polycarbonate dans un appareil d'extrusion ; et
c. à mélanger, dans l'appareil d'extrusion, le mélange sec à base de polycarbonate avec plus de 0% en poids à 50% en poids d'un composant de charge thermiquement conductrice.

**16.** Procédé de l'une quelconque des revendications 14 et 15, comprenant en outre l'introduction dans l'appareil d'extrusion dans une zone d'extrusion en aval de 25% en poids à 60% en poids d'une charge renforçante, de plus de 0% en poids à 50% en poids d'un composant de renforcement, de plus de 0% en poids à 20% en poids d'un ignifuge, et/ou de plus de 0% en poids à 5% en poids d'au moins un additif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012056971 A1
- US 7786246 B
- US 4217438 A
- US 3635895 A
- US 4001184 A
- US 4064112 A
- US 4161579 A
- US 4154775 A